(19)

Europäisches
Patentamt
European
Patent Office
Office européen
des brevets

(11) **EP 4 132 018 B1**

(12) **EUROPEAN PATENT SPECIFICATION**

(45) Date of publication and mention
of the grant of the patent:
**17.09.2025 Bulletin 2025/38**

(21) Application number: **21822362.6**

(22) Date of filing: **03.06.2021**

(51) International Patent Classification (IPC):
$G01S\ 5/02^{(2010.01)}$    $H04W\ 4/02^{(2018.01)}$
$H04B\ 17/318^{(2015.01)}$    $H04W\ 88/02^{(2009.01)}$
$H04W\ 12/63^{(2021.01)}$    $H04W\ 8/00^{(2009.01)}$
$H04B\ 17/20^{(2015.01)}$    $G01S\ 11/06^{(2006.01)}$
$H04W\ 64/00^{(2009.01)}$

(52) Cooperative Patent Classification (CPC):
**H04W 8/005; G01S 5/0249; G01S 11/06;
H04B 17/253; H04B 17/318; H04W 4/023;
H04W 12/122; H04W 12/63; H04W 64/00;
H04W 64/006; H04W 76/10; G01S 2205/01;
H04W 88/02**

(86) International application number:
**PCT/KR2021/006956**

(87) International publication number:
**WO 2021/251687 (16.12.2021 Gazette 2021/50)**

(54) **METHOD AND DEVICE FOR DETERMINING PROXIMITY OF ELECTRONIC DEVICE**

VERFAHREN UND VORRICHTUNG ZUR BESTIMMUNG DER NÄHE EINER ELEKTRONISCHEN
VORRICHTUNG

PROCÉDÉ ET DISPOSITIF PERMETTANT DE DÉTERMINER LA PROXIMITÉ D'UN DISPOSITIF
ÉLECTRONIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.06.2020 KR 20200069847**

(43) Date of publication of application:
**08.02.2023 Bulletin 2023/06**

(73) Proprietor: **Samsung Electronics Co., Ltd.
Gyeonggi-do 16677 (KR)**

(72) Inventors:
• **PEDAN, Stanislav**
**L'va Tolstogo St. Kyiv,, 01032 (UA)**
• **ALIEKSIEIEV, Mykola**
**L'va Tolstogo St. Kyiv,, 01032 (UA)**
• **GUSH, Roman**
**L'va Tolstogo St. Kyiv,, 01032 (UA)**

(74) Representative: **Gulde & Partner
Patent- und Rechtsanwaltskanzlei mbB
Berliner Freiheit 2
10785 Berlin (DE)**

(56) References cited:
**WO-A1-2016/161020**    **KR-B1- 102 048 013**
**US-A1- 2017 094 470**    **US-A1- 2017 332 190**
**US-A1- 2019 191 286**    **US-B1- 9 125 144**

• LUO JUAN ET AL: "Indoor Security Localization
Algorithm Based on Location Discrimination
Ability of AP", 10 December 2019, 16TH
EUROPEAN CONFERENCE - COMPUTER VISION
- ECCV 2020, CORNELL UNIVERSITY LIBRARY,
201 OLIN LIBRARY CORNELL UNIVERSITY
ITHACA, NY 14853, PAGE(S) 472 - 487,
XP047532138

## Description

TECHNICAL FIELD

The present disclosure relates to a method and device for determining, by an electronic device, proximity of an external electronic device, and more particularly, to a method and device for determining proximity of an external electronic device, based on signal strength of a wireless communication signal from the external electronic device, the signal strength being measured by an electronic device.

BACKGROUND ART

In various areas such as smart home appliances and Internet of Things (IoT) environment, there is an increasing need for electronic devices to be connected with other external electronic device by using a wireless communication scheme and then to exchange information. In order to establish trusted wireless communication connection between electronic devices, the electronic devices are often requested to be positioned within a close range. In this regard, methods for verifying proximity of an electronic device are used.

In an embodiment, an electronic device may determine that it is positioned within a close range when communication via a low-band signal channel is available by using an additional low-band signal channel other than a wireless communication channel. However, this method has drawback as it requires separate hardware and communication channel which result in high costs. In an embodiment, an electronic device may determine that electronic devices are positioned in a close range when the electronic devices observe the same environment object or feature. However, this method also requests additional input device and sensor, and computational complexity thereof is high.

Accordingly, there is a demand for a technology capable of determining proximity of an electronic device with high usability and accuracy while solving the problems described above.

Conventional devices and methods of determining distance of an external electronic device to an electronic device, based on signal strength of a wireless communication signal from the external electronic device are disclosed in WO 2016/161020 A1, US 2019/191286 A1 and LUO JUAN ET AL: "Indoor Security Localization Algorithm Based on Location Discrimination Ability of AP", 10 December 2019 (2019-12-10), 16TH EUROPEAN CONFERENCE - COMPUTER VISION - ECCV 2020, CORNELL UNIVERSITY LIBRARY, 201 OLIN LIBRARY CORNELL UNIVERSITY ITHACA, NY 14853, PAGE(S) 472- 487.

DESCRIPTION OF EMBODIMENTS

TECHNICAL PROBLEM

The technical problem to be solved by the present disclosure is to provide an improved method and device for determining proximity of an electronic device, with high accuracy and user convenience.

Also, various embodiments of the present disclosure may provide a method and device for determining proximity of an external electronic device, based on signal strength of a wireless communication signal.

Also, various embodiments of the present disclosure may provide a method and device for authenticating an external electronic device, based on proximity.

SOLUTION TO PROBLEM

The invention is defined by the appended set of claims. The description that follows is subjected to this limitation. Any disclosure lying outside the scope of said claims is only intended for illustrative as well as comparative purposes.

As a technical mean to resolve the technical problems addressed above, a method, performed by an electronic device, of determining proximity of an external electronic device may include: measuring a first received signal strength indicator (RSSI) of a first wireless communication signal received from the external electronic device when the electronic device is at a first position; measuring a second RSSI of a second wireless communication signal received from the external electronic device when the electronic device is at a second position different from the first position; and determining that the external electronic device is proximate to the electronic device, based on an RSSI difference from the first RSSI measured at the first position and the second RSSI measured at the second position is equal to or greater than a preset threshold.

As a technical mean to resolve the technical problems addressed above, an electronic device may include: a communicator configured to receive a wireless communication signal from an external electronic device and measure a received signal strength indicator (RSSI) of the received wireless communication signal; a memory storing one or more instructions; and at least one processor, wherein the at least one processor is configured to execute the one or more instructions to measure a first RSSI of a first wireless communication signal received via the communicator from the external electronic device when the electronic device is at a first position, measure a second RSSI of a second wireless communication signal received via the communicator from the external electronic device when the electronic device is at a second position different from the first position, and determine that the external electronic device is proximate to the electronic device, based on an RSSI difference the first RSSI measured at the first position and the second RSSI measured at the second position is equal to or greater than a preset threshold.

As a technical mean to resolve the technical problems addressed above, a computer-readable recording medium may store a program for performing, on a computer, at least one of embodiments of the disclosed method.

BRIEF DESCRIPTION OF DRAWINGS

FIG. 1 is a diagram illustrating an example of a system that requires a proximity check.

FIG. 2 is a concept diagram of a method by which an electronic device determines proximity of an external electronic device, according to various embodiments.

FIGS. 3A and 3B are diagrams illustrating an example of an RSSI measured according to a distance between an electronic device and an external electronic device.

FIG. 4 is a block diagram illustrating a configuration of an electronic device for determining proximity of an external electronic device, according to various embodiments.

FIG. 5 is a flowchart illustrating a wireless authentication procedure for authenticating, by an electronic device, an external electronic device, according to various embodiments.

FIG. 6 is a flowchart of a method by which an electronic device determines proximity of an external electronic device, according to various embodiments.

FIG. 7 is a flowchart of a method by which an electronic device determines proximity of an external electronic device, according to various embodiments.

FIG. 8 is a flowchart of a method by which an electronic device determines proximity of an external electronic device, according to various embodiments.

FIG. 9 is a mechanical diagram of a state of an electronic device for checking proximity of an external electronic device, according to various embodiments.

FIG. 10A is a diagram illustrating an example of a received signal strength indicator (RSSI) measured by an electronic device when an external electronic device is proximate to the electronic device.

FIG. 10B is a diagram illustrating an example of an RSSI measured by an electronic device when an external electronic device is not proximate to the electronic device.

FIG. 10C is a diagram illustrating an example of an RSSI measured by an electronic device when an attacker attempts signal prediction.

FIGS. 11A to 11E are diagrams of screen configurations of an electronic device to determine proximity of an external electronic device, according to various embodiments.

FIG. 12 is a diagram illustrating an embodiment in which a method of the present disclosure by which an electronic device determines proximity is used.

FIG. 13 is a diagram illustrating another embodiment in which a method of the present disclosure by which an electronic device determines proximity is used.

FIG. 14 is a diagram illustrating another embodiment in which a method of the present disclosure by which an electronic device determines proximity is used.

FIG. 15 is a diagram illustrating another embodiment in which a method of the present disclosure by which an electronic device determines proximity is used.

FIG. 16 is a block diagram illustrating a configuration of an electronic device for determining proximity of an external electronic device, according to various embodiments.

MODE OF DISCLOSURE

Hereinafter, various embodiments of the present disclosure will be described with reference to the accompanying drawings. However, it should be understood that the present disclosure is not limited to these particular embodiments but also includes various modifications, equivalents, and/or alternatives thereof. Throughout the specification and drawings, like reference numerals may be used to denote like components.

When used herein, terms such as "comprise," "include," and "have" specify the presence of stated features (e.g., values, functions, operations, components such as parts) but do not preclude the presence or addition of one or more other features.

As used herein, expressions such as "A or B," "at least one of A and/or B," or "one or more of A and/or B" may include any and all combinations of one or more of the associated listed items. For example, "A or B," "at least one of A and B," or "at least one of A or B" may denote all of the cases of (1) including at least one A, (2) including at least one B, and (3) including at least one A and at least one B.

Terms such as "first" and "second" used herein may use various elements or components regardless of their order and/or importance. These terms may be used only to distinguish one element or component from another element or component, and these elements or components should not be limited by these terms. For example, a first user device and a second user device may refer to different user devices regardless of their order or importance. For example, without departing from the scope of the present disclosure, a first component may be referred to as a second component, and similarly, a second component may be referred to as a first component.

It will be understood that when a component (e.g., a first component) is referred to as being "(operatively or communicatively) coupled to/with" or "connected to/with" another component (e.g., a second component), it may be coupled to/with or connected to/with the other component directly or indirectly through one or more other components (e.g., third components). On the other hand, when a component (e.g., a first component) is referred to as being "directly coupled to/with" or "directly connected to/with" another component (e.g., a second component), no other components (e.g., third components) exist therebetween.

The expression "configured to (or set to)" used herein may be replaced with, for example, "suitable for," "having the capacity to," "designed to," "adapted to," "made to," or "capable of" according to cases. The expression "configured to (or set to)" may not necessarily mean "specifically designed to" in a hardware level. Instead, in some case, the expression "apparatus configured to ..." may mean that the apparatus is "capable of ..." along with other devices or parts. For example, "a processor configured to (or set to) perform A, B, and C" may refer to a dedicated processor (e.g., an embedded processor) for performing a corresponding operation, or a generic-purpose processor (e.g., a central processing unit (CPU) or an application processor (AP)) capable of performing a corresponding operation by executing one or more software programs stored in a memory device.

The terms used herein are just for the purpose of describing particular embodiments and are not intended to limit the scope of the present disclosure. As used herein, the singular forms "a," "an," and "the" may include the plural forms as well, unless the context clearly indicates otherwise. Unless otherwise defined, all terms including technical or scientific terms used herein may have the same meanings as commonly understood by those of ordinary skill in the art of the present disclosure. The terms defined in commonly used dictionaries may be interpreted as having the same meanings as the contextual meanings of the related art and will not be interpreted in an idealized or overly formal sense unless expressly so defined herein. In some cases, even the terms defined herein may not be interpreted to exclude the embodiments of the present disclosure.

An electronic device or an external electronic device according to various embodiments of the present disclosure may include, for example, at least one of a smartphone, a tablet personal computer (PC), a mobile phone, a video phone, an e-book reader, a desktop PC, a laptop PC, a netbook computer, a workstation, a server, a personal digital assistant (PDA), a portable multimedia player (PMP), a Motion Picture Expert Group (MPEG) audio layer 3 (MP3) player, a mobile medical device, a camera, or a wearable device. According to various embodiments, the wearable device may include at least one of accessory-type devices (e.g., watches, rings, wristlets, anklets, necklaces, spectacles, contact lenses, or head-mounted devices (HMDs)), textile or clothing-integrated devices (e.g., electronic clothing), body-attachable devices (e.g., skin pads or tattoos), or bio-implantable devices (e.g., implantable circuits).

In some embodiments, the external electronic device may be a home appliance. The home appliance may include, for example, at least one of a television (TV), a digital video disk (DVD) player, an audio device, a refrigerator, an air conditioner, a cleaner, an oven, a microwave oven, a washing machine, an air cleaner, a set-top box, a home automation control panel, a security control panel, a TV box (e.g., Samsung HomeSync™, Apple TV™, or Goggle TV™), a game console (e.g., Xbox™ or PlayStation™), an electronic dictionary, an electronic key, a camcorder, or an electronic picture frame.

In other embodiments, the external electronic device may include at least one of any type of medical device (e.g., any type of portable medical meter (such as a blood sugar meter, a heart rate meter, a blood pressure meter, or a body temperature meter), a magnetic resonance angiography (MRA) device, a magnetic resonance imaging (MRI) device, a computerized tomography (CT) device, a tomograph, or an ultrasound machine), a navigation device, a global navigation satellite system (GNSS), an event data recorder (EDR), a flight data recorder (FDR), an automotive infotainment device, an electronic ship equipment (e.g., a ship navigation device or a gyrocompass), an avionic device, a security device, a vehicle head unit, an industrial or home robot, an automatic teller machine (ATM) of a financial institution, a point-of-sale (POS) device of a store, or an Internet-of-Things (IoT) device (e.g., an electric bulb, any type of sensor, an electricity or gas meter, a sprinkler, a fire alarm, a thermostat, a street lamp, a toaster, an exercise equipment, a hot-water tank, a heater, or a boiler).

According to some embodiments, the external electronic device may include at least one of a part of furniture or building/structure, an electronic board, an electronic signature receiving device, a projector, or any type of meter (e.g., a water meter, an electricity meter, a gas meter, or a radio wave meter).

In various embodiments, the electronic device and the external electronic device may be any one or any combination of the above-described various devices. The electronic device and the external electronic device according to some embodiments may each be a flexible electronic device. Also, the electronic device and the external electronic device according to embodiments of the present disclosure are not limited to the above-described devices and may include new electronic devices resulting from technology development.

Hereinafter, the present disclosure will be described in detail with reference to the accompanying drawings.

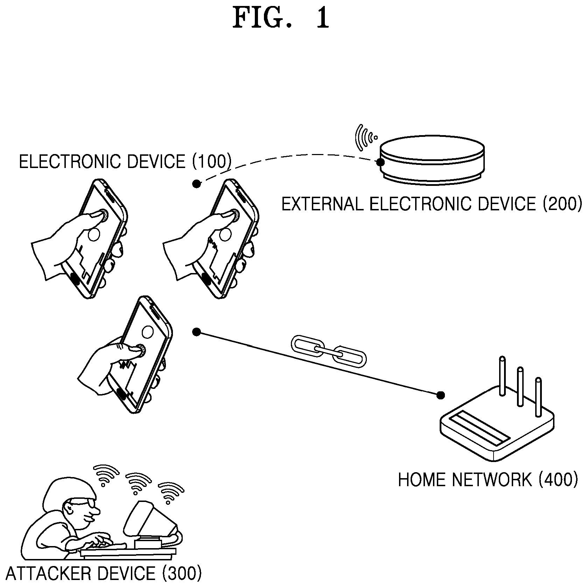

FIG. 1 is a diagram illustrating an example of a system that requires a proximity check.

Referring to FIG. 1, the system requiring a proximity check may include an electronic device 100 and at least one external electronic device 200. While one external electronic device is shown, the number of external electronic devices which can be included in the system is not limited.

The electronic device 100 and the external electronic device 200 may each have a wireless communication function and may be connected to each other by using a wireless communication scheme. The wireless communication scheme may include, but is not limited to, wireless local area network (Wi-Fi), Bluetooth, Bluetooth low energy, ZigBee, Wi-Fi direct (WFD), ultra wideband (UWB), infrared Data Association (IrDA) communication, Near Field Communication (NFC), and the like.

In an embodiment, the external electronic device 200 may be an access point (AP) for connecting the electronic device 100 to a network. In an embodiment, the external electronic device 200 may be a device for executing a preset function, and the electronic device 100 may be a device for controlling or configuring an operation of the external electronic device 200. In an embodiment, the electronic device 100 and the external electronic device 200 may be devices that mutually share content.

In various embodiments, the system requiring a proximity check may further include a home network 400. The electronic device 100 may be connected to the home network 400 in a wired communication manner or wireless communication manner. The network may include a local area network (LAN), wide area network (WAN), a value added network (VAN), a mobile radio communication network, a satellite communication network, and a combination thereof, and may include wired Internet, wireless Internet, and a mobile wireless communication network. In an embodiment, the electronic device 100 as a trusted device may be connected to the home network 400. In an embodiment, connection between the electronic device 100 and the home network 400 may be encrypted connection. As an example, the system in which the electronic device 100 is connected to the home network 400 is illustrated in FIG. 1 but the present disclosure is not limited thereto.

In order to newly connect the external electronic device 200, which is not connected for communication with the electronic device 100 or the home network 400, to the electronic device 100 or the home network 400, the electronic device 100 may authenticate whether the external electronic device 200 is a trusted device. The external electronic device 200 may send a wireless communication signal for connection to the electronic device 100. An attacker device 300 that attempts to intrude into the electronic device 100 or the home network 400 may also send a wireless communication signal faked as a signal from the external electronic device 200. Therefore, in order for the electronic device 100 to determine whether a received wireless communication signal is a signal from the trusted external electronic device 200, the electronic device 100 may check whether the external electronic device 200 is proximate to the electronic device 100. In an embodiment, the electronic device 100 may check proximity of the external electronic device 200 when initially connecting to the external electronic device 200.

In various embodiments, the electronic device 100 may measure signal strength of a wireless communication signal received from the external electronic device 200, and may determine proximity of the external electronic device 200, based on the measured signal strength. The electronic device 100 may measure signal strength of a wireless communication signal received from the external electronic device 200 when the electronic device 100 is at a first position, and the electronic device 100 may measure signal strength of a wireless communication signal received from the external electronic device 200 when the electronic device 100 is at a second position different from the first position. The electronic device 100 may determine whether the external electronic device 200 is proximate to the electronic device 100, based on a difference between the signal strength measured at the first position and the signal strength measured at the second position.

In an embodiment, the first position and the second position may respectively correspond to a near position and a far position with respect to the external electronic device 200, or vice versa in another embodiment. For example, a user holding the electronic device 100 may unfold his/her arm toward the external electronic device 200 so as to allow the electronic device 100 to measure signal strength at a position proximate to the external electronic device 200. Also, the user holding the electronic device 100 may bend his/her arm so as to allow the electronic device 100 to measure signal strength at a position far from the external electronic device 200. In another example, the user may dispose the electronic device 100 to measure signal strength at a first position, and may dispose the electronic device 100 to measure signal strength at a second position one step closer to or distant from the first position with respect to the external electronic device 200.

In an embodiment, after strength of a wireless communication signal is measured at each of the first position and the second position, the electronic device 100 may re-measure, at at least one of the first position or the second position, signal strength of a wireless communication signal received from the external electronic device 200, and then may determine whether the external electronic device 200 is proximate to the electronic device 100, based on the re-measured signal strength.

In various embodiments, when it is determined that the external electronic device 200 is proximate to the electronic device 100, the electronic device 100 may authenticate the external electronic device 200 as a trusted device. In an embodiment, the electronic device 100 may establish encrypted wireless communication connection to the authenticated external electronic device 200. In an embodiment, the home network 400 may set direct communication connection to the external electronic device 200 authenticated by the electronic device 100.

In other embodiments, when proximity of the external electronic device 200 is not checked, the external electronic device 200 is not distinguished from the attacker device 300, and thus, the electronic device 100 may not authenticate the external electronic device 200. In this case, the electronic device 100 and the home network 400 may not establish wireless communication connection to the external electronic device 200.

In an embodiment, the electronic device 100 may receive information about a state of the external electronic device 200 from the authenticated external electronic device 200. In an embodiment, the electronic device 100 may transmit a command for controlling or configuring an operation of the external electronic device 200 to the authenticated external electronic device 200. In an embodiment, the electronic device 100 may receive content from the authenticated external electronic device 200. In an embodiment, the electronic device 100 may transmit content to the authenticated external electronic device 200.

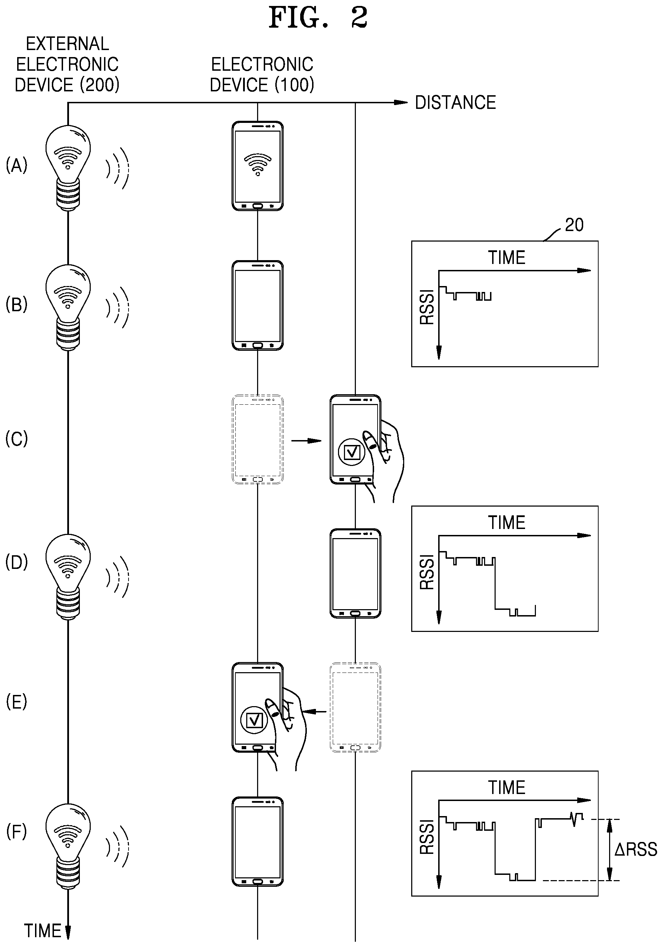

FIG. 2 is a concept diagram of a method by which an electronic device determines proximity of an external electronic device, according to various embodiments.

Referring to FIG. 2, in operation (A), the electronic device 100 may detect a wireless communication signal sent by the external electronic device 200. A user of the electronic device 100 may start a procedure for checking proximity of the external electronic device 200 so as to establish wireless communication connection to the external electronic device 200.

In an embodiment, the electronic device 100 may request the user to dispose the electronic device 100 at a first position. In an embodiment, in response to reception of a first user input of confirming that the electronic device 100 is disposed at the first position, the electronic device 100 may start measurement of signal strength in operation (B).

In operation (B), the electronic device 100 may measure, at the first position, a received signal strength indicator (RSSI) of a wireless communication signal received from the external electronic device 200. In an embodiment, the electronic device 100 may measure an RSSI during a preset first time period. In an embodiment, the first time period may be randomly determined.

In operation (C), when RSSI measurement at the first position is completed, the user of the electronic device 100 may change a position of the electronic device 100 to a second position different from the first position. In an embodiment, the second position may be away from the external electronic device 200, compared to the first position. In another embodiment, the second position may be close to the external electronic device 200, compared to the first position. In an embodiment, a distance between the first position and the second position may be a short distance, compared to a distance between the electronic device 100 and the external electronic device 200.

In an embodiment, when RSSI measurement at the first position is completed, the electronic device 100 may request the user to change the position of the electronic device 100. In response to reception of a second user input of confirming, by the user, that the electronic device 100 is disposed at the second position, the electronic device 100 may start measurement of an RSSI in operation (D).

In operation (D), the electronic device 100 may measure, at the second position, an RSSI of a wireless communication signal received from the external electronic device 200. In an embodiment, the electronic device 100 may measure an RSSI during a preset second time period. In an embodiment, the second time period may be randomly determined.

In operation (E), when RSSI measurement at the second position is completed, the user of the electronic device 100 may change a position of the electronic device 100 back to the first position. In an embodiment, when the RSSI measurement at the second position is completed, the electronic device 100 may request the user to change the position of the electronic device 100 back to its original position. In response to reception of a third user input of confirming, by the user, that the electronic device 100 is disposed again at the first position, in operation (F), the electronic device 100 may start measurement of an RSSI.

In operation (F), the electronic device 100 may re-measure, at the first position, an RSSI of a wireless communication signal received from the external electronic device 200. In an embodiment, the electronic device 100 may measure an RSSI during a preset third time period. In an embodiment, the third time period may be randomly determined.

In an embodiment, instead of re-measurement of an RSSI at the first position by re-disposing the electronic device 100 at the first position in operations (E) and (F), an RSSI of the second position may be re-measured by re-disposing the electronic device 100 at the second position. In an embodiment, operations (E) and (F) may be omitted.

The electronic device 100 may measure an RSSI difference (ΔRSSI), based on the RSSI measured at the first position and the RSSI measured at the second position. The electronic device 100 may determine proximity of the external electronic device 200, based on the measured RSSI difference. In an embodiment, when a difference between the RSSI measured at the first position and the RSSI measured at the second position is equal to or greater than a threshold, the electronic device 100 may determine that the external electronic device 200 is proximate to the electronic device 100.

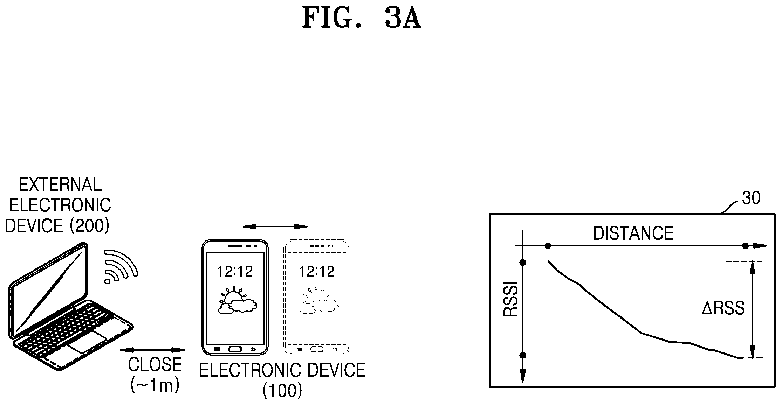

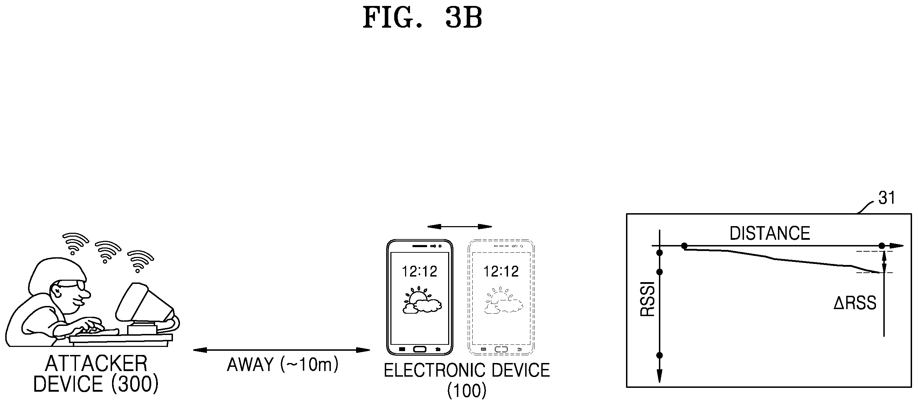

FIGS. 3A and 3B are diagrams illustrating an example of an RSSI measured according to a distance between an electronic device and an external electronic device.

Strength of a wireless communication signal tends to logarithmically decrease according to distances. Therefore, as it is close to a sender, variation of an RSSI according to a change in positions of a receiver is high.

Referring to FIG. 3A, a case is shown in which a device sending a wireless communication signal is a device in a short range from the electronic device 100, e.g., the device being the external electronic device 200 in a range smaller than 1 m. In this case, an RSSI of a wireless communication signal according to a distance between the electronic device 100 and the external electronic device 200 sharply decreases as the distance increases as shown in the graph 30. That is, even when a position of the electronic device 100 is slightly changed, an RSSI is significantly changed. Therefore, a difference ΔRSSI between an RSSI measured at a first position and an RSSI measured at a second position may be expressed as a relatively great value.

On the other hand, referring to FIG. 3B, a case is shown in which a device sending a wireless communication signal is a device distant from the electronic device 100, e.g., the device being the attacker device 300 sending a signal faked as a signal from the external electronic device in a range of 1 to 10 m. When the attacker device 300 amplifies and sends a signal, the signal from the remote attacker device may be received with similar strength to a signal received from the proximate external electronic device. However, as shown in the graph 31, an RSSI of a wireless communication signal according to a distance between the electronic device 100 and the attacker device 300 is not significantly changed even when the distance increases. That is, when a position of the electronic device 100 is changed in a same interval as the case of FIG. 3A, the RSSI is small changed, compared to the case of FIG. 3A. Therefore, a difference ΔRSSI between an RSSI measured at a first position and an RSSI measured at a second position may be expressed as a relatively small value.

By using such feature, the electronic device 100 may determine whether a received wireless communication signal is sent from a proximate device, based on a difference between an RSSI measured at a first position and an RSSI measured at a second position. In an embodiment, when the difference between the RSSI measured at the first position and the RSSI measured at the second position is equal to or greater than a preset threshold, the electronic device 100 may determine that a received wireless communication signal is sent from the proximate external electronic device 200.

Within a close range from the external electronic device 200, even when a positional change of the electronic device 100 is not great, an RSSI difference is sufficiently large, such that the user may not need to greatly move the electronic device 100 in the proximity check procedure. Also, the proximity check is determined only based on relative greatness of an RSSI difference and is not dependent on setting of the electronic device 100, an antenna position, or accuracy of an operation by the user. For example, with an operation in which the user holding the electronic device 100 unfolds or bends a user's arm or the user holding the electronic device 100 moves one step, an RSSI difference required for the proximity check may be sufficiently obtained. Therefore, a method of determining proximity according to the present disclosure may be highly usable and obtain a stable and predictable result.

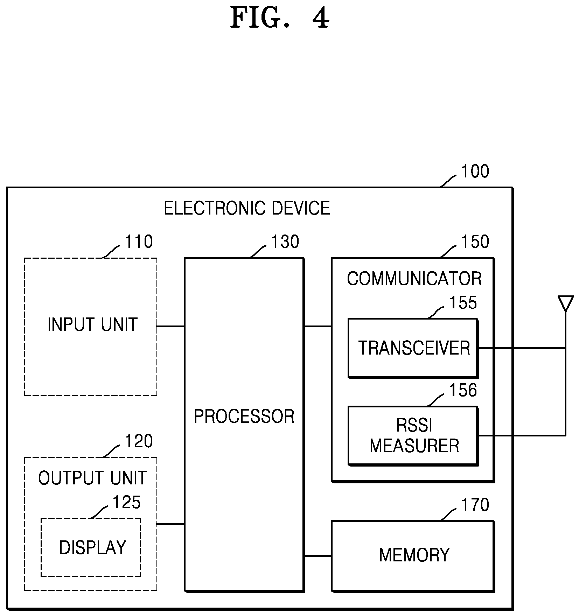

FIG. 4 is a block diagram illustrating a configuration of an electronic device for determining proximity of an external electronic device, according to various embodiments.

Referring to FIG. 4, an electronic device 100 according to various embodiments may include an input unit 110, an output unit 120, a processor 130, a communicator 150, and a memory 170. However, not all of the components illustrated in FIG. 4 are essential components of the electronic device 100. The electronic device 100 may be implemented with more components than the components illustrated in FIG. 4, or may be implemented with fewer components than the components illustrated in FIG. 4.

The input unit 110 refers to a unit configured to receive a user input for controlling the electronic device 100. For example, the input unit 110 may be, but is not limited to, a key pad, a dome switch, a touch pad (e.g., a touch-type capacitive touch pad, a pressure-type resistive overlay touch pad, an infrared sensor-type touch pad, a surface acoustic wave conduction touch pad, an integration-type tension measurement touch pad, a piezoelectric effect-type touch pad, or the like), a jog wheel, or a jog switch.

In various embodiments, the input unit 110 may receive a first user input of confirming that the electronic device 100 is disposed at a first position. In various embodiments, the input unit 110 may receive a second user input of confirming that the electronic device 100 is disposed at a second position. In various embodiments, the input unit 110 may receive a third user input of confirming that the electronic device 100 is re-disposed at the first position or the second position.

In various embodiments, the input unit 110 may receive a user input for controlling or configuring an operation of the external electronic device 200. The input unit 110 may receive a user input for receiving or transmitting content from or to the external electronic device 200.

The output unit 120 may output an audio signal, a video signal, or a vibration signal. The output unit 120 may include a display 125. The display 125 displays and outputs information processed by the electronic device 100.

In various embodiments, the display 125 may output information about a progress of a proximity check procedure with respect to the external electronic device 200. In an embodiment, the display 125 may output information indicating that RSSI measurement at a first position or a second position is being performed. In an embodiment, the display 125 may output information indicating that RSSI measurement at a first position or a second position is completed or information indicating a failure of RSSI measurement. In an embodiment, the display 125 may output information indicating a proximity determination result and authentication result with respect to the external electronic device 200.

In an embodiment, the display 125 may output a message requesting a user to dispose the electronic device 100 at a first position. In an embodiment, the display 125 may output a message requesting a user to change a position of the electronic device 100.

When the display 125 and a touch pad form a layer structure and thus constitute a touch screen, the display 125 may be used as both an input device and an output device.

The communicator 150 may include one or more communication modules for communication with the external electronic device 200 and the home network 400. For example, the communicator 150 may include a short-range wireless communication unit and a mobile communication unit. The short-range wireless communication unit may include, but is not limited to, a Bluetooth communication unit, a Bluetooth Low Energy (BLE) communication unit, a near field communication (NFC) unit, a WLAN (Wi-Fi) communication unit, a ZigBee communication unit, an IrDA communication unit, a WFD communication unit, an UWB communication unit, an Ant+ communication unit, and the like. The mobile communication unit transmits and receives a wireless signal to and from at least one of a base station, an external terminal, or a server, on a mobile communication network. Here, the wireless signal may include various types of data according to transmission and reception of voice call signals, video call signals, or text/multimedia messages.

In various embodiments, the communicator 150 may include a transceiver 155 for receiving a wireless communication signal transmitted from the external electronic device 200, and an RSSI measurer 156 for measuring an RSSI of the wireless communication signal. In an embodiment, the communicator 150 may measure an RSSI of a wireless communication signal during a preset time period, under the control of the processor 130.

In various embodiments, the communicator 150 may establish encrypted wireless communication connection with the authenticated external electronic device 200. In an embodiment, the communicator 150 may receive information about a state of the authenticated external electronic device 200. In an embodiment, the communicator 150 may transmit, to the authenticated external electronic device 200, a command for controlling or configuring an operation of the external electronic device 200. In an embodiment, the communicator 150 may receive content from the authenticated external electronic device 200. In an embodiment, the communicator 150 may transmit content to the authenticated external electronic device 200.

The memory 170 may store a program for controlling an operation of the electronic device 100. The memory 170 may include at least one instruction for controlling an operation of the electronic device 100. Also, the memory 170 may store data input to the electronic device 100 or output from the electronic device 100.

The memory 170 may include at least one of a flash memory-type storage medium, a hard disk-type storage medium, a multimedia card micro-type storage medium, a card-type memory (e.g., SD or xD memory), random-access memory (RAM), static RAM (SRAM), read-only memory (ROM), electrically erasable programmable ROM (EEPROM), programmable ROM (PROM), magnetic memory, a magnetic disk, and an optical disc.

The processor 130 may generally control the overall operation of the electronic device 100. For example, the processor 130 may execute programs stored in the memory 170 to generally control the input unit 110, the output unit 120, the communicator 150, or the like. The processor 130 may control operations of the electronic device 100 in the present disclosure by controlling the input unit 110, the output unit 120, the communicator 150, or the like.

In various embodiments, in order to determine whether a wireless communication signal received via the communicator 150 is a signal from a trusted external electronic device, the processor 130 may check whether the external electronic device 200 is proximate to the electronic device 100.

In various embodiments, the processor 130 may measure an RSSI of a wireless communication signal received from the external electronic device 200 via the communicator 150 when the electronic device 100 is at a first position. The processor 130 may measure an RSSI of a wireless communication signal received from the external electronic device 200 via the communicator 150 when the electronic device 100 is at a second position different from the first position.

In an embodiment, the processor 130 may re-measure an RSSI of a wireless communication signal received from the external electronic device via the communicator 150 at at least one of the first position or the second position. In an embodiment, when a measurement result of an RSSI at a particular position does not satisfy a preset reference, the processor 130 may determine to re-measure an RSSI at the corresponding position. In an embodiment, the processor 130 may determine a position at which an RSSI is to be re-measured, to be a random position among the first position and the second position.

In various embodiments, the processor 130 may determine whether the external electronic device 200 is proximate, based on a difference between the RSSI measured at the first position and the RSSI measured at the second position. In an embodiment, when the difference between the RSSI measured at the first position and the RSSI measured at the second position is equal to or smaller than a preset threshold, the processor 130 may determine that the external electronic device 200 is proximate to the electronic device 100.

In various embodiments, when a first user input of confirming that the electronic device 100 is disposed at a first position is received from the input unit 110, the processor 130 may measure an RSSI of a wireless communication signal received from the external electronic device 200 via the communicator 150 at the first position. When RSSI measurement at the first position is completed, the processor 130 may control the output unit 120 to request a user to change a position of the electronic device 100. When a second user input of confirming that the electronic device 100 is disposed at a second position is received from the input unit 110, the processor 130 may measure an RSSI of a wireless communication signal received from the external electronic device 200 via the communicator 150 at the second position.

In various embodiments, the processor 130 may control the communicator 150 to measure an RSSI of a wireless communication signal during a preset time period. In an embodiment, the processor 130 may randomly determine the preset time period for every RSSI measurement.

In various embodiments, when it is determined that the external electronic device 200 is proximate to the electronic device 100, the processor 130 may authenticate the external electronic device 200 as a trusted device. In an embodiment, the processor 130 may control the communicator 150 to establish encrypted wireless communication connection with the authenticated external electronic device 200.

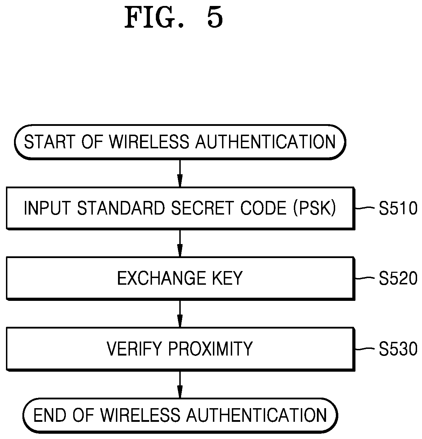

FIG. 5 is a flowchart illustrating a wireless authentication procedure for authenticating, by an electronic device, an external electronic device, according to various embodiments. Operations shown in FIG. 5 may be performed between the electronic device 100 and the external electronic device 200 shown in FIGS. 1 and 2.

Referring to FIG. 5, in operation S510, the electronic device 100 may set a standard secret code to be used to authenticate the external electronic device 200. The standard secret code may be input by a user when connection to the external electronic device 200 is initially authenticated.

In an embodiment, the standard secret code may be a pre-shared key (PSK) being preshared between the electronic device 100 and the external electronic device 200. In an embodiment, the electronic device 100 and the external electronic device 200 may generate a pairwise master key (PMK), based on the PSK and a network identifier (SSID) of the external electronic device 200.

In operation S520, the electronic device 100 may exchange an encryption key for establishing wireless communication connection with the external electronic device 200. The encryption key may be a transient key generated from the standard secret code.

In an embodiment, the electronic device 100 and the external electronic device 200 may exchange the encryption key according to a four-step handshake procedure. First, the external electronic device 200 may generate nonce (ANonce), and may transmit a first message including ANonce to the electronic device 100. When the electronic device 100 receives the first message, the electronic device 100 may generate nonce (SNonce), and may generate a pairwise transient key (PTK) based on the SNonce, the received ANonce, and a standard secret code. Next, the electronic device 100 may transmit, to the external electronic device 200, a second message including SNonce and a message integrity code (MIC). When the external electronic device 200 receives the second message, the external electronic device 200 may check the received MIC, and when the received MIC is valid, the external electronic device 200 may generate a PTK based on the ANonce, the received SNonce, and the standard secret code. Next, the external electronic device 200 may generate a group temporal key (GTK) and then may transmit a third message including the GTK and the MIC to the electronic device 100. When the electronic device 100 receives the third message, the electronic device 100 may check the received MIC, and when the received MIC is valid, the electronic device 100 may install the PTK. Lastly, the electronic device 100 may transmit a confirmation message to the external electronic device 200. When the external electronic device 200 receives the confirmation message, the external electronic device 200 may install the PTK.

When wireless authentication is performed only via operation S510 and operation S520 described above, there is a problem that the wireless authentication is vulnerable to an attack attempt in which the attacker device 300 disguises itself as the external electronic device 200 in setting of the standard secret code in operation S510. For example, the attacker device 300 may be a software-based wireless access point (AP) to amplify and send a signal with service identification information (e.g., SSID and MAC) disguised as the external electronic device 200. In this case, the wireless authentication via operation S510 and operation S520 may permit wireless communication connection while failing to distinguish between the attacker device 300 and the external electronic device 200.

In order to solve the problem, in operation S530, the electronic device 100 may additionally authenticate proximity of the external electronic device 200. In various embodiments, the electronic device 100 may measure an RSSI of a wireless communication signal received from the external electronic device 200, and may determine proximity of the external electronic device 200, based on the measured RSSI. A particular method of determining proximity of the external electronic device 200 based on an RSSI of a wireless communication signal received from the electronic device will be described in detail in various embodiments of the present disclosure.

**EP 4 132 018 B1**

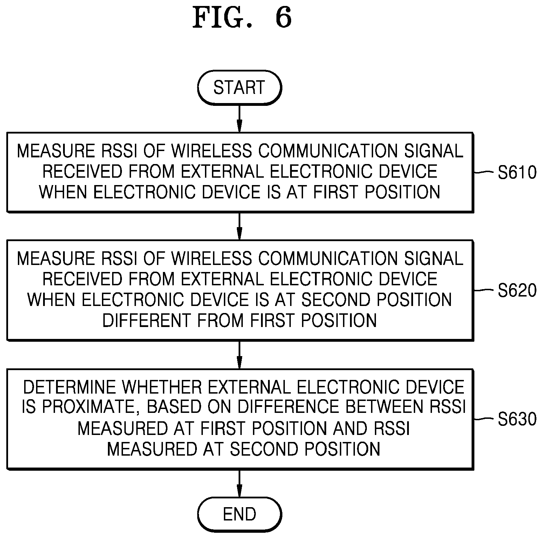

FIG. 6 is a flowchart of a method by which an electronic device determines proximity of an external electronic device, according to various embodiments. Operations shown in FIG. 6 may be performed by the electronic device 100 shown in FIGS. 1 and 2 or the electronic device 100 or the processor 130 of the electronic device shown in FIG. 4. The operations shown in FIG. 6 may correspond to operation S530 of FIG. 5.

Referring to FIG. 6, in operation S610, the electronic device 100 may measure an RSSI of a wireless communication signal received from the external electronic device 200 when the electronic device 100 is at a first position.

In an embodiment, the electronic device 100 may determine whether the measured RSSI satisfies a preset condition, and when the preset condition is not satisfied, the electronic device 100 may re-measure, at the first position, an RSSI of a wireless communication signal received from the external electronic device 200.

In operation S620, the electronic device 100 may measure an RSSI of a wireless communication signal received from the external electronic device 200 when the electronic device 100 is at a second position different from the first position. In an embodiment, a distance between the first position and the second position may be shorter than a distance between the electronic device 100 and the external electronic device 200. For example, the distance between the first position and the second position may be smaller than 50 cm.

In an embodiment, the electronic device 100 may determine whether the measured RSSI satisfies a preset condition, and when the preset condition is not satisfied, the electronic device 100 may re-measure, at the second position, an RSSI of a wireless communication signal received from the external electronic device 200.

In operation S630, the electronic device 100 may determine whether the external electronic device 200 is proximate, based on a difference between the RSSI measured at the first position and the RSSI measured at the second position. In an embodiment, when the difference between the RSSI measured at the first position and the RSSI measured at the second position is equal to or greater than a preset threshold, the electronic device 100 may determine that the external electronic device 200 is proximate to the electronic device 100.

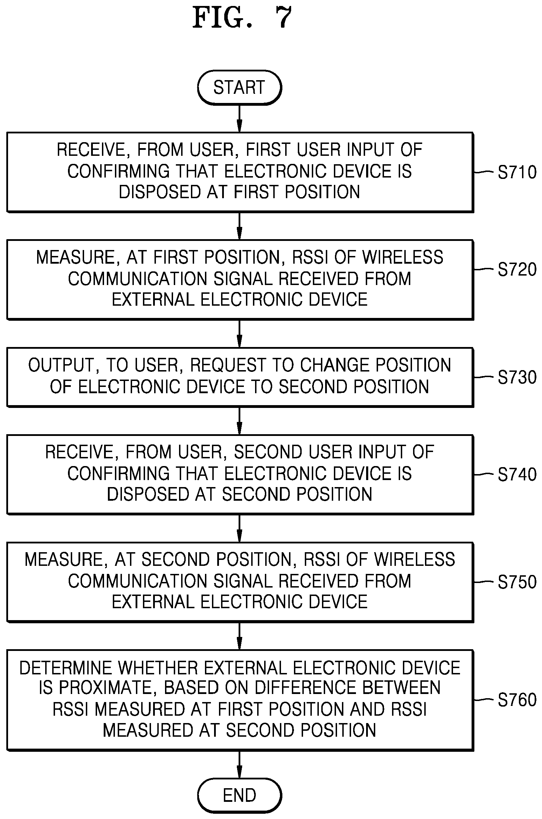

FIG. 7 is a flowchart of a method by which an electronic device determines proximity of an external electronic device, according to various embodiments. Operations shown in FIG. 7 may be performed by the electronic device 100 shown in FIGS. 1 and 2 or the electronic device 100 or the processor 130 of the electronic device shown in FIG. 4. The operations shown in FIG. 7 may correspond to operation S530 of FIG. 5.

Referring to FIG. 7, in operation S710, the electronic device 100 may receive, from a user, a first user input of confirming that the electronic device 100 is disposed at a first position. In an embodiment, the electronic device 100 may request the user to dispose the electronic device 100 at the first position, and may receive the first user input corresponding to the request.

In an embodiment, the first position may be a close position or a distant position from the external electronic device 200, compared to a second position to be described below. In an embodiment, the electronic device 100 may randomly select, in every proximity verification, whether to set the first position to be a close position or a distant position with respect to the external electronic device 200. According to a result of the selection, the electronic device 100 may request the user to dispose the electronic device 100 at a position close to or distant from the external electronic device 200.

In an embodiment, regardless of an actual distance between the electronic device 100 and the external electronic device 200, the electronic device 100 may determine, as a first position, a position of the electronic device 100 when a first user input is received. For example, the electronic device 100 may output a confirmation request asking the user whether to start measurement, and may receive a confirmation input from the user.

In operation S720, the electronic device 100 may measure, at the first position, an RSSI of a wireless communication signal received from the external electronic device 200, in response to the first user input of confirming that the electronic device 100 is disposed at the first position.

In an embodiment, the electronic device 100 may determine whether the measured RSSI satisfies a preset condition, and when the preset condition is not satisfied, the electronic device 100 may re-measure, at the first position, an RSSI of a wireless communication signal received from the external electronic device 200. For example, the electronic device 100 may request the user to re-dispose the electronic device 100 at the first position, and may request a first user input corresponding to the request. In response to the first user input being received, the electronic device 100 may re-measure, at the first position, an RSSI of a wireless communication signal received from the external electronic device 200.

In operation S730, when RSSI measurement at the first position is completed, the electronic device 100 may output, to the user, a request to change a position of the electronic device 100 to a second position.

In an embodiment, the electronic device 100 may output, to the user, a request to change the position of the electronic device 100 to a more distant position or a closer position. For example, in a case where the first position is determined to be a position close to the external electronic device 200, when RSSI measurement at the first position is completed, the electronic device 100 may output, to the user, a request to change the position of the electronic device 100 to a more distant position. As another example, in a case where the first position is determined to be a position distant from the external electronic device 200, when RSSI measurement at the first position is completed, the electronic device 100 may output, to the user, a request to change the position of the electronic device 100 to a closer position.

10

In operation S740, the electronic device 100 may receive, from the user, a second user input of confirming that the electronic device 100 is disposed at a second position.

In an embodiment, regardless of an actual distance between the electronic device 100 and the external electronic device 200, the electronic device 100 may determine, as a second position, a position of the electronic device 100 when a second user input is received. For example, the electronic device 100 may output a confirmation request asking the user whether a position change is completed, and may receive a confirmation input from the user.

In operation S750, in response to the second user input being received, the second user input of confirming that the electronic device 100 is disposed at the second position, the electronic device 100 may measure, at the second position, an RSSI of a wireless communication signal received from the external electronic device 200.

In an embodiment, the electronic device 100 may determine whether the measured RSSI satisfies a preset condition, and when the preset condition is not satisfied, the electronic device 100 may re-measure, at the second position, an RSSI of a wireless communication signal received from the external electronic device 200. For example, the electronic device 100 may request the user to re-dispose the electronic device 100 at the second position, and may receive a second user input corresponding to the request. In response to the second user input being received, the electronic device 100 may re-measure, at the second position, an RSSI of a wireless communication signal received from the external electronic device 200.

In operation S760, the electronic device 100 may determine whether the external electronic device 200 is proximate, based on a difference between the RSSI measured at the first position and the RSSI measured at the second position.

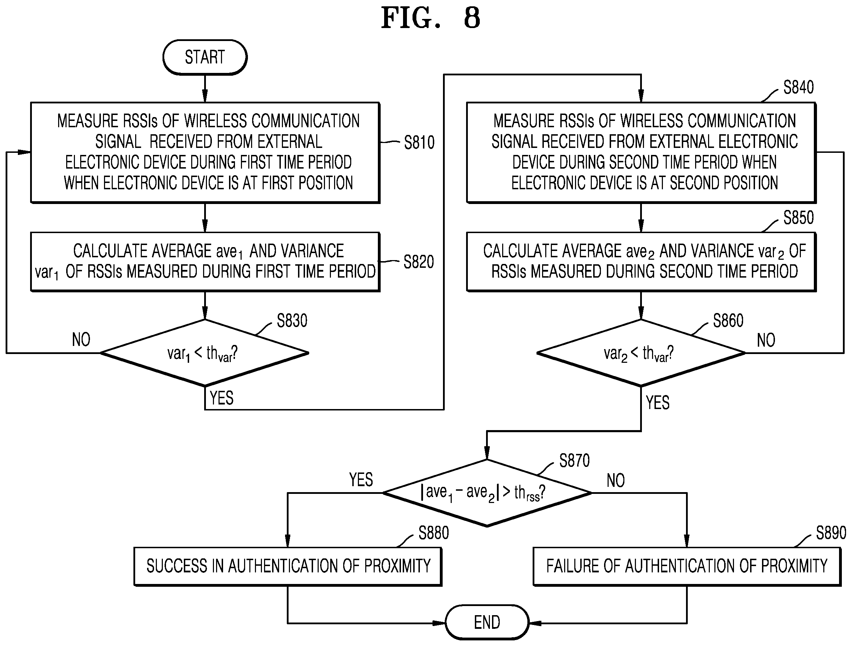

FIG. 8 is a flowchart of a method by which an electronic device determines proximity of an external electronic device, according to various embodiments. Operations shown in FIG. 8 may be performed by the electronic device 100 shown in FIGS. 1 and 2 or the electronic device 100 or the processor 130 of the electronic device shown in FIG. 4. The operations shown in FIG. 8 may correspond to operation S530 of FIG. 5.

Referring to FIG. 8, in operation S810, the electronic device 100 may measure RSSI of a wireless communication signal received from the external electronic device 200 during a first time period when the electronic device 100 is at a first position. In various embodiments, the first time period may be randomly determined for every RSSI measurement. In an embodiment, the electronic device 100 may randomly determine the first time period within a preset range. In an embodiment, the first time period may be at least 1 second or more.

In operation S820, the electronic device 100 may calculate an average $ave_1$ and variance $var_1$ of the RSSI measured during the first time period when the electronic device 100 is at the first position.

In operation S830, the electronic device 100 may determine whether the variance $var_1$ of the RSSI measured during the first time period is smaller than a variance threshold $th_{var}$. The variance threshold $th_{var}$ may be preset as a reference value with which it is determined whether the electronic device 100 and a wireless communication signal are stable during a measurement time period.

When the variance $var_1$ of the RSSI measured during the first time period is smaller than the variance threshold $th_{var}$, the electronic device 100 may determine that measurement at the first position is completed, and may determine the average $ave_1$ of the measured RSSI as an RSSI of the wireless communication signal received from the external electronic device 200, at the first position. In this case, the electronic device 100 may perform operation S840.

On the other hand, when the variance $var_1$ of the RSSI measured during the first time period is equal to or greater than the variance threshold $th_{var}$, the electronic device 100 may determine that the electronic device 100 is not stationary at the first position during the measurement time period or the wireless communication signal is unstable. In this case, the electronic device 100 may perform again operation S810. In an embodiment, the electronic device 100 may request a user to perform re-measurement at the first position, and may start re-measurement in response to an input from the user.

In operation S840, the electronic device 100 may measure an RSSI of a wireless communication signal received from the external electronic device 200 during a second time period when the electronic device 100 is at a second position. In various embodiments, the second time period may be randomly determined for every RSSI measurement. In an embodiment, the electronic device 100 may randomly determine the second time period within a preset range. In an embodiment, the second time period may be at least 1 second or more.

In operation S850, the electronic device 100 may calculate an average $ave_2$ and variance $var_2$ of the RSSI measured during the second time period when the electronic device 100 is at the second position.

In operation S860, the electronic device 100 may determine whether the variance $var_2$ of the RSSI measured during the second time period is smaller than the variance threshold $th_{var}$.

When the variance $var_2$ of the RSSI measured during the second time period is smaller than the variance threshold $th_{var}$, the electronic device 100 may determine that measurement at the second position is completed, and may determine the average $ave_2$ of the measured RSSI as an RSSI of the wireless communication signal received from the external electronic device 200. In this case, the electronic device 100 may perform operation S870.

On the other hand, when the variance $var_2$ of the RSSI measured during the second time period is equal to or greater than the variance threshold $th_{var}$, the electronic device 100 may determine that the electronic device 100 is not stationary at the second position during the measurement time period or the wireless communication signal is unstable. In this case, the electronic device 100 may perform again operation S860. In an embodiment, the electronic device 100 may request the user to perform re-measurement at the second position, and may start re-measurement in response to an input from the user.

In operation S870, the electronic device 100 may determine whether a difference between the RSSI $ave_1$ measured at the first position and the RSSI $ave_2$ measured at the second position is greater than a preset RSSI threshold $th_{rss}$. The preset RSSI threshold $th_{rss}$ may be preset as a reference value with which it is determined whether the external electronic device 200 is positioned close to the electronic device 100.

When the difference between the RSSI $ave_1$ measured at the first position and the RSSI $ave_2$ measured at the second position is greater than the preset RSSI threshold $th_{rss}$, in operation S880, the electronic device 100 may determine that the external electronic device 200 is proximate to the electronic device 100. In an embodiment, based on determining that the external electronic device 200 is proximate to the electronic device 100, the electronic device 100 may authenticate the external electronic device 200 as a trusted device.

On the other hand, when the difference between the RSSI $ave_1$ measured at the first position and the RSSI $ave_2$ measured at the second position is equal to or less than the preset RSSI threshold $th_{rss}$, in operation S890, the electronic device 100 may determine that proximity of the external electronic device 200 cannot be verified. In an embodiment, the electronic device 100 may not authenticate the external electronic device 200 of which proximity is not verified.

In an embodiment, the electronic device 100 may additionally re-measure, at the first position, an RSSI of a wireless communication signal received from the external electronic device 200. The re-measurement method may be the same as in operations S810 to S830, but a measurement time period therefor may be different from that of initial measurement.

In an embodiment, the electronic device 100 may measure an RSSI of a wireless communication signal received from the external electronic device 200 during a third time period when the electronic device 100 is at the first position. In various embodiments, the third time period may be randomly determined for every RSSI measurement. The electronic device 100 may calculate an average $ave_3$ and variance $var_3$ of the RSSI measured during the third time period. The electronic device 100 may determine whether the variance $var_3$ of the RSSI measured during the third time period is smaller than the variance threshold $th_{var}$.

When the variance $var_3$ of the RSSI measured during the third time period is smaller than the variance threshold $th_{var}$, the electronic device 100 may determine that re-measurement at the first position is completed, and may determine the average $ave_3$ of the measured RSSI as an RSSI of the wireless communication signal received from the external electronic device 200, at the first position. As another example, when the variance $var_3$ of the RSSI measured during the third time period is equal to or greater than the variance threshold $th_{var}$, the electronic device 100 may perform re-measurement at the first position.

In an embodiment, the electronic device 100 may determine whether a difference between the RSSI $ave_3$ re-measured at the first position and the RSSI $ave_2$ measured at the second position is greater than the preset RSSI threshold $th_{rss}$, and may determine whether the external electronic device 200 is proximate to the electronic device 100 according to a result of the determination. In an embodiment, when the difference between the RSSI $ave_1$ initially measured at the first position and the RSSI $ave_2$ measured at the second position and the difference between the RSSI $ave_3$ re-measured at the first position and the RSSI $ave_2$ measured at the second position are both greater than the preset RSSI threshold $th_{rss}$, the electronic device 100 may determine that the external electronic device 200 is proximate to the electronic device 100

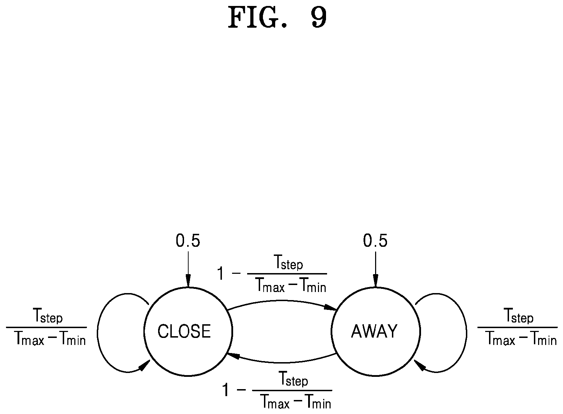

FIG. 9 is a mechanical diagram of a state of an electronic device for checking proximity of an external electronic device, according to various embodiments.

Referring to FIG. 9, in a proximity verification procedure with respect to the external electronic device 200, a state of the electronic device 100 may be represented by a CLOSE state in which the electronic device 100 is at a position close to the external electronic device 200 and an AWAY state in which the electronic device 100 is at a position distant from the external electronic device 200. One of the CLOSE state and the AWAY state may correspond to a first position and the other one may correspond to a second position.

In various embodiments, an initial state, i.e., a first position, may be randomly selected among a CLOSE position and an AWAY position with respect to the external electronic device 200. For example, a probability that the first position is close and a probability that the first position is away may be equally set to 50 %.

In each state, the electronic device 100 may measure an RSSI of a wireless communication signal received from the external electronic device 200. In various embodiments, a time period the electronic device 100 stays at each state, i.e., a time period in which an RSSI of a wireless communication signal received from the external electronic device 200 is measured may be randomly determined. In an embodiment, a measurement time period may be determined at interval of a preset unit measurement time period $T_{step}$ within a range of a minimum measurement time period $T_{min}$ and a maximum measurement time period $T_{max}$. For example, in a case where the minimum measurement time period $T_{min}$ is 1000 ms, the maximum measurement time period $T_{max}$ is 3000 ms, and a unit measurement time period $T_{step}$ is 100 ms, an RSSI measurement time period at each position may be randomly determined among 1000, 1100, 1200, ..., 2800, 2900, 3000.

As another example, when the unit measurement time period $T_{step}$ is 200 ms, an RSSI measurement time period at each position may be randomly determined among 1000, 1200, 1400, ..., 2600, 2800, 3000.

There may be a case where, in order to pass proximity verification, the attacker device 300 in a distant position may randomly generate a fake signal copied variance of an RSSI received by the electronic device 100. For example, the attacker device 300 may fake, by alternately generating a high-strength signal and a weak-strength signal, wireless communication signals from the proximate external electronic device 200 which are measured at a close position and an away position.

In this case, a probability that a fake signal from the attacker device 300 is maintained with constant strength during a randomly-determined measurement time period is calculated according to $\dfrac{T_{step}}{T_{max} - T_{min}}$. Also, a probability that strength of the fake signal from the attacker device 300 is changed when the measurement time period randomly determined by the electronic device 100 is elapsed is calculated according to $1 - \dfrac{T_{step}}{T_{max} - T_{min}}$.

Therefore, a probability that a randomly-generated wireless communication signal passes proximity verification corresponds to Equation 1.

[Equation 1]

$$P = \frac{1}{2}\left(\frac{T_{step}}{T_{max} - T_{min}} \cdot \left(1 - \frac{T_{step}}{T_{max} - T_{min}}\right)\right)^{N-1}$$

For example, it is assumed a case where the electronic device 100 measures an RSSI three times in order of first position - second position - first position, wherein a measurement time period at each position is randomly determined within a range of a minimum measurement time period $T_{min}$ = 1000 ms and a maximum measurement time period $T_{max}$ = 3000 ms, at interval of a unit time period $T_{step}$ = 100 ms. In this case, a probability that the randomly-generated fake signal corresponds to a first position determined to be one of CLOSE and AWAY is 0.5. Also, a probability that the randomly-generated fake signal is constantly maintained at each position during a randomly-determined measurement time period is $\dfrac{100}{3000 - 1000} = 0.05$. Also, a probability that the randomly-generated fake signal is changed when the randomly-determined measurement time period is elapsed is $1 - \dfrac{100}{3000 - 1000} = 0.95$. Therefore, a probability that the randomly-generated fake signal passes proximity verification is calculated according to $P = \dfrac{1}{2}\left(\dfrac{100}{3000 - 1000} \cdot \left(1 - \dfrac{100}{3000 - 1000}\right)\right)^{2} = 0.001128 = 0.1128\%$

The electronic device 100 may randomly determine a measurement time period at an initial position and each position, and thus, may decrease a probability that the attacker device 300 fakes variance of an RSSI measured by the electronic device 100 and may provide a sufficient security level against an attack from a fake device generating a fake wireless communication signal.

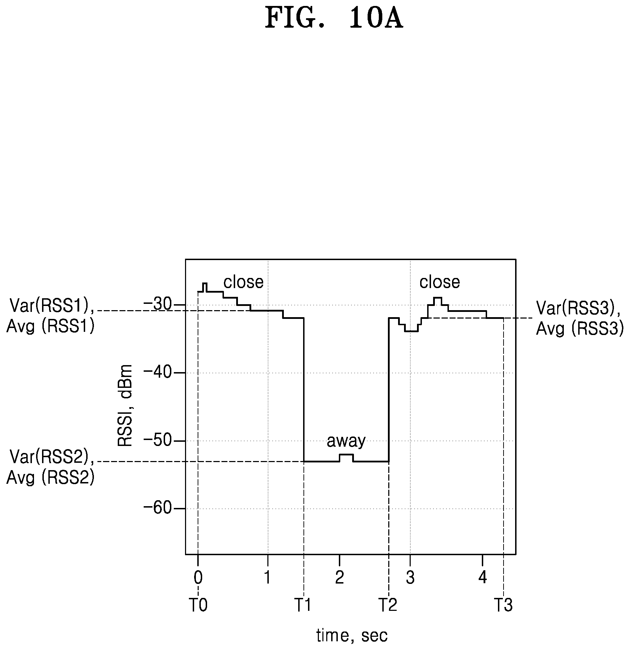

FIG. 10A is a diagram illustrating an example of an RSSI measured by an electronic device when an external electronic device is proximate to the electronic device.

Referring to FIG. 10A, in an embodiment, a result is illustrated in which an initial position at which an RSSI of a wireless communication signal received from the external electronic device 200 is to be measured is selected as a close position (CLOSE), and RSSI measurement is performed three times in order of a close position (CLOSE), an away position (AWAY), and a close position (CLOSE). The electronic device 100 may randomly determine an initial position among a close position (CLOSE) and an away position (AWAY).

The electronic device 100 may measure an RSSI of a wireless communication signal received from the external electronic device 200, during a randomly-determined first time period T1-T0 at a first position. The electronic device 100 may calculate an average Avg (RSS1) and variance Var (RSS1) of the RSSI measured during the first time period.

The electronic device 100 may determine whether the variance Var (RSS1) of the RSSI measured during the first time period is smaller than a preset variance threshold. When the variance Var (RSS1) is greater than the variance threshold, the electronic device 100 may attempt to perform re-measurement or may end a proximity check procedure. On the other hand, when the variance Var (RSS1) is smaller than the variance threshold, the electronic device 100 may determine that measurement at the first position is completed and may request a user to change a position of the electronic device 100 to the second position, i.e., the away position (AWAY).

When an input of confirming that the position of the electronic device 100 is changed to the second position is received from the user, the electronic device 100 may measure an RSSI of a wireless communication signal received from the external electronic device 200 during a randomly-determined second time period T2-T1 at the second position. The electronic device 100 may calculate an average Avg (RSS2) and variance Var (RSS2) of the RSSI measured during the second time period.

The electronic device 100 may determine whether the variance Var (RSS2) of the RSSI measured during the second time period is smaller than a preset variance threshold. When the variance Var (RSS2) is greater than the variance threshold, the electronic device 100 may attempt to perform re-measurement or may end a proximity check procedure.

When the variance Var (RSS2) of the RSSI is smaller than the variance threshold, the electronic device 100 may determine whether the average Avg (RSS1) of the RSSI measured at the first position is greater than the average Avg (RSS2) measured at the second position and whether a difference between the average Avg (RSS1) and the average Avg (RSS2) is greater than a preset RSSI threshold. When the electronic device 100 is positioned proximate to the external electronic device 200, an RSSI at the close position (CLOSE) and the away position (AWAY) may be highly differently measured as illustrated in FIG. 10A.

If all the conditions above are not satisfied, the electronic device 100 may determine that proximity of the external electronic device 200 cannot be verified and may end a proximity check procedure. On the other hand, when the conditions are satisfied, the electronic device 100 may determine that measurement at the second position is completed and may request the user to change a position of the electronic device 100 to the first position, i.e., the close position (CLOSE).

When an input of confirming that the position of the electronic device 100 is changed to the first position is received from the user, the electronic device 100 may re-measure an RSSI of a wireless communication signal received from the external electronic device 200 during a randomly-determined third time period T3-T2 at the first position. The electronic device 100 may calculate an average Avg (RSS3) and variance Var (RSS3) of the RSSI re-measured during the third time period.

The electronic device 100 may determine whether the variance Var (RSS3) of the RSSI re-measured during the third time period is smaller than a preset variance threshold. When the variance Var (RSS3) is greater than the variance threshold, the electronic device 100 may attempt to perform re-measurement or may end a proximity check procedure.

When the variance Var (RSS3) of the RSSI is smaller than the variance threshold, the electronic device 100 may determine whether the average Avg (RSS3) of the RSSI re-measured at the first position is greater than the average Avg (RSS2) measured at the second position and whether a difference between the average Avg (RSS3) and the average Avg (RSS2) is greater than a preset RSSI threshold.

If all the conditions above are not satisfied, the electronic device 100 may determine that proximity of the external electronic device 200 cannot be verified and may end a proximity check procedure. On the other hand, when the conditions are satisfied, the electronic device 100 may determine that the external electronic device 200 is proximate to the electronic device 100 and may end a proximity check procedure.

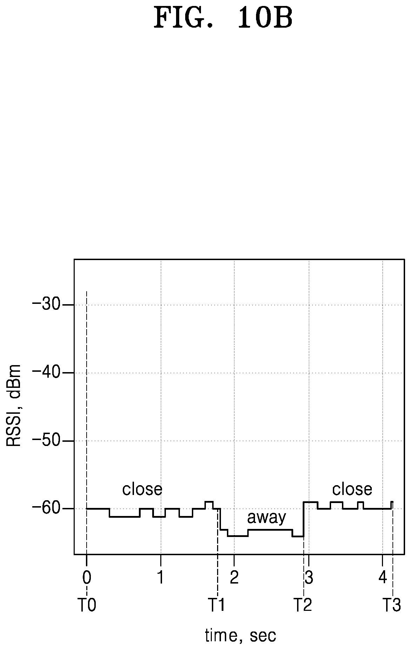

FIG. 10B is a diagram illustrating an example of an RSSI measured by an electronic device when an external electronic device is not proximate to the electronic device.

As in the embodiment of FIG. 10A, referring to FIG. 10B, in an embodiment, a result is illustrated in which an initial position at which an RSSI of a wireless communication signal received from the external electronic device 200 is to be measured is selected as a close position (CLOSE), and RSSI measurement is performed three times in order of a close position (CLOSE), an away position (AWAY), and a close position (CLOSE).

As in the embodiment of FIG. 10A, the electronic device 100 may measure an RSSI of a wireless communication signal received from the external electronic device 200, during a randomly-determined first time period T1-T0 at a first position. The electronic device 100 may calculate an average Avg (RSS1) and variance Var (RSS1) of the RSSI measured during the first time period. The electronic device 100 may measure an RSSI of a wireless communication signal received from the external electronic device 200, during a randomly-determined second time period T2-T1 at a second position. The electronic device 100 may calculate an average Avg (RSS2) and variance Var (RSS2) of the RSSI measured during a second time period. The electronic device 100 may determine whether the average Avg (RSS1) of the RSSI measured at the first position is greater than the average Avg (RSS2) measured at the second position and whether a difference between the average Avg (RSS1) and the average Avg (RSS2) is greater than a preset RSSI threshold.

As illustrated in FIG. 10B, when the electronic device 100 is located away from the external electronic device 200, an RSSI at the close position (CLOSE) and an RSSI at the away position (AWAY) may be measured not to have a big difference. Therefore, when the conditions above are not satisfied, the electronic device 100 may determine that proximity of the external electronic device 200 cannot be verified and may end a proximity check procedure.

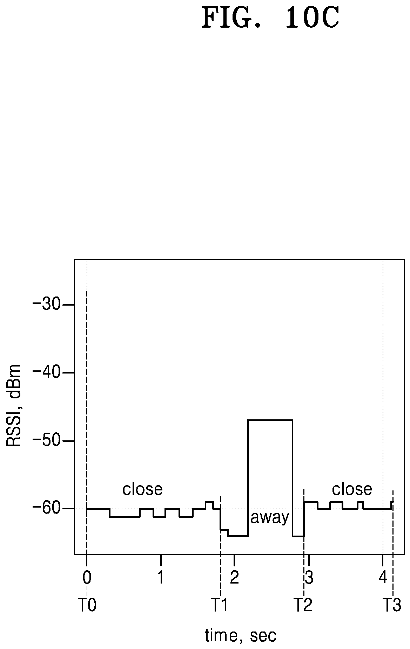

FIG. 10C is a diagram illustrating an example of an RSSI measured by an electronic device when an attacker attempts signal prediction.

As in the embodiment of FIG. 10A, referring to FIG. 10C, in an embodiment, a result is illustrated in which an initial position at which an RSSI of a wireless communication signal received from the external electronic device 200 is to be measured is selected as a close position (CLOSE), and RSSI measurement is performed three times in order of a close position (CLOSE), an away position (AWAY), and a close position (CLOSE). However, a wireless communication signal received in relation to FIG. 10C is not a signal from the actual external electronic device 200 but is a fake signal the attacker device 300 disguising as the external electronic device 200 randomly generated.

For example, as illustrated in FIG. 10C, the attacker device 300 may fake results of measurements of wireless communication signals from the proximate external electronic device 200 at a close position (CLOSE) and an away position (AWAY) by alternately generating a high-strength signal and a weak-strength signal.

As in the embodiment of FIG. 10A, the electronic device 100 may measure an RSSI of a wireless communication signal received at a first position during a randomly-determined first time period T1-T0. The electronic device 100 may calculate an average Avg (RSS1) and variance Var (RSS1) of the RSSI measured during the first time period. The electronic device 100 may measure an RSSI of a wireless communication signal received at a second position during a randomly-determined second time period T2-T1. The electronic device 100 may calculate an average Avg (RSS2) and variance Var (RSS2) of the RSSI measured during the second time period.

A probability that time intervals at which strength of a fake signal randomly generated by the attacker device 300 is changed completely match measurement time periods randomly determined by the electronic device 100 is sufficiently low. Therefore, in a case of a fake signal from the attacker device 300, as illustrated in FIG. 10C, strength of a signal may be changed during a measurement time period, and in this case, a deviation of a measured RSSI may be large. Accordingly, when variances Var RSS1, Var RSS2, and Var RSS3 of the measured RSSI are greater than a preset variance threshold, the electronic device 100 may attempt re-measurement, or may determine that proximity of the external electronic device 200 cannot be verified and may end a proximity check procedure.

Also, a fake signal randomly generated by the attacker device 300 may not be able to predict an initial position randomly determined by the electronic device 100. For example, the electronic device 100 has determined the first position to be the close position (CLOSE) and the second position to be the away position (AWAY), but the attacker device 300 may initially generate a weak signal and then may generate a strong signal. Therefore, in a case of a fake signal by the attacker device 300, an average Avg (RSS1) of an RSSI measured at the first position may be smaller than an average Avg (RSS2) of an RSSI measured at the second position. In this case, the electronic device 100 may determine that proximity of the external electronic device 200 cannot be verified and may end a proximity check procedure.

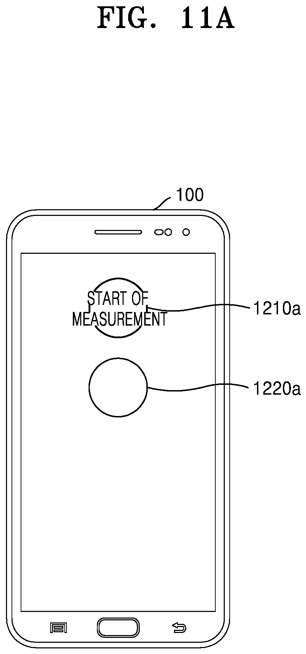

FIGS. 11A to 11E are diagrams of screen configurations of an electronic device to determine proximity of an external electronic device, according to various embodiments.

The electronic device 100 may display a user interface to deliver information associated with a proximity check procedure to a user and receive an input from the user. In various embodiments, the user interface may include a first position measurement area 1210a, 1210b, 1210c, a second position measurement area 1220a, 1220b, 1220c, a message display area 1230a, 1230b, an RSSI display area 1240, a result display area 1250, and a procedure end button 1260. However, not all of the components illustrated in FIGS. 11A to 11E are essential components of the user interface. The user interface may include more components than the components illustrated in FIGS. 11A to 11E, and some of the components illustrated in FIGS. 11A to 11E may be omitted.

The first position measurement area 1210: 1210a, 1210b, 1210c and the second position measurement area 1220: 1220a, 1220b, 1220c may be areas in which a process of a proximity check procedure by the current electronic device 100 is visually shown. In various embodiments, the first position measurement area 1210 and the second position measurement area 1220 may include information indicating at which position the current electronic device 100 shall measure an RSSI or at which position the current electronic device 100 is measuring an RSSI. In various embodiments, the first position measurement area 1210 may include an object for receiving, from a user, a first user input of confirming that the electronic device 100 is disposed at a first position, and the second position measurement area 1220 may include an object for receiving, from the user, a second user input of confirming that the electronic device 100 is disposed at a second position.

The message display area 1230: 1230a, 1230b may be an area in which a request message for the user is displayed. The RSSI display area 1240 may be an area in which an RSSI measurement result is displayed.

The result display area 1250 may be an area in which a result of determination of the proximity check procedure is provided to the user. The procedure end button 1260 may be an object for receiving, from the user, an input of confirming the result of determination and ending the proximity check procedure.

Referring to FIG. 11A, when the proximity check procedure is started, the electronic device 100 may request the user to dispose the electronic device 100 at a first position, and may display a measurement standby user interface to receive a first user input corresponding to the request.

In various embodiments, when the proximity check procedure is started, the electronic device 100 may activate the first position measurement area 1210 to a measurement standby mode. In an embodiment, a first position measurement area 1210a activated to the measurement standby mode may be displayed to be visually different from the first position measurement area 1210 in an inactive state or another active mode. For example, the first position measurement area 1210a activated to the measurement standby mode may be displayed with a first color and may internally include information (e.g., text, image, icon, symbol, or the like) indicating a measurement standby state. In an embodiment, the first position measurement area 1210a activated to the measurement standby mode may display information indicating whether the first position is a close position (CLOSE) or an away position (AWAY).

In various embodiments, the first position measurement area 1210a activated to the measurement standby mode may receive a first user input from the user. The first user input may include a click or touch event within the first position measurement area 1210a.

In various embodiments, the electronic device 100 may inactivate the second position measurement area 1220 while the first position measurement area 1210 is activated. The inactivated second position measurement area 1220a may be displayed with a second color, and may be configured not to receive a user input.

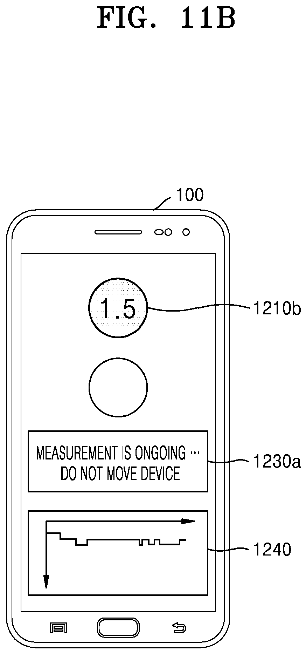

Referring to FIG. 11B, in response to a first user input being received, the first user input of confirming that the electronic device 100 is disposed at a first position, the electronic device 100 may display an ongoing-measurement user interface indicating that an RSSI of a wireless communication signal received from the external electronic device 200 is being measured at the first position.

In various embodiments, in response to a first user input being received via the first position measurement area 1210a activated to an input standby mode, the electronic device 100 may activate the first position measurement area 1210 to an ongoing-measurement mode. In an embodiment, a first position measurement area 1210b activated to the ongoing-measurement mode may be displayed to be visually different from the first position measurement area 1210b in an inactive state or another active mode. For example, the first position measurement area 1210b activated to the ongoing-measurement mode may internally include information (e.g., text, image, icon, symbol, or the like) indicating ongoing measurement. In an embodiment, the first position measurement area 1210b activated to the ongoing-measurement mode may display a remaining measurement time in real time.

In various embodiments, the message display area 1230 may display a message 1230a requesting the user not to move a device while an RSSI of a received wireless communication signal is measured at the first position.

In various embodiments, the RSSI display area 1240 may display an RSSI measurement result at the first position. In an embodiment, the RSSI display area 1240 may display a measured RSSI in a real-time graph.

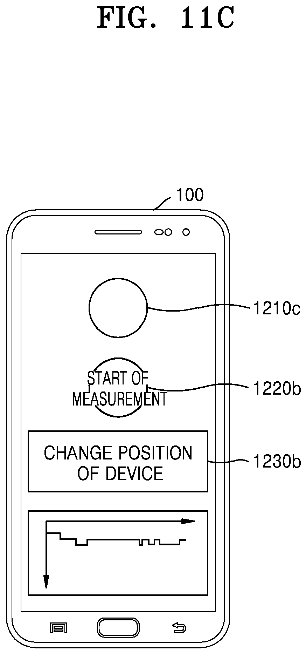

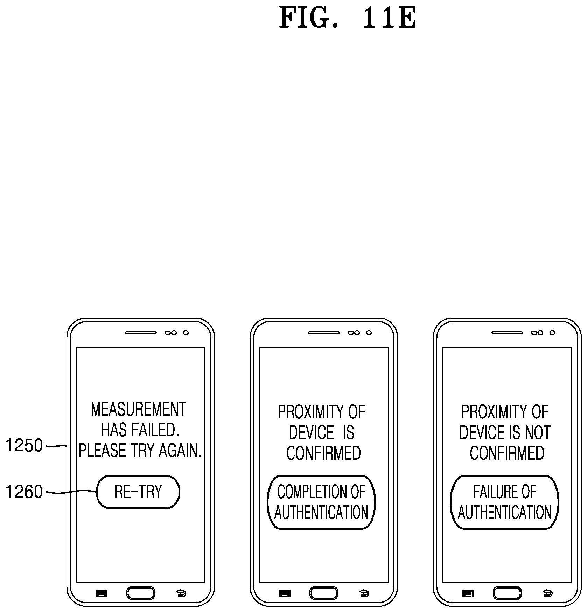

In various embodiments, the electronic device 100 may determine whether the RSSI measurement result at the first position satisfies a preset condition. For example, the electronic device 100 may determine whether a deviation of the RSSI measured at the first position is smaller than a preset deviation threshold. When the preset condition is satisfied, the electronic device 100 may determine that the measurement at the first position is completed and may display a user interface of FIG. 11C. Otherwise, the electronic device 100 may determine that the measurement has failed and may display a re-measurement user interface of FIG. 11E.

Referring to FIG. 11C, in response to the RSSI measurement at the first position being completed, the electronic device 100 may request the user to dispose the electronic device 100 at a second position and may display a measurement standby user interface to receive a second user input corresponding to the request.

In various embodiments, in response to the RSSI measurement at the first position being completed, the electronic device 100 may inactivate the first position measurement area 1210. An inactivated first position measurement area 1210c may be displayed with a second color, and may be configured not to receive a user input.

In various embodiments, in response to the RSSI measurement at the first position being completed, the electronic device 100 may inactivate the second position measurement area 1220 to a measurement standby mode. In an embodiment, a second position measurement area 1220b activated to the measurement standby mode may be displayed to be visually different from the second position measurement area 1220 in an inactive state or another active mode, as in the first position measurement area 1210. For example, the second position measurement area 1220b activated to the measurement standby mode may be displayed with a first color and may internally include information (e.g., text, image, icon, symbol, or the like) indicating a measurement standby state. In an embodiment, the second position measurement area 1220b activated to the measurement standby mode may display information indicating whether the second position is a close position (CLOSE) or an away position (AWAY).

In various embodiments, the second position measurement area 1220b activated to the measurement standby mode may receive a second user input from the user. The second user input may include a click or touch event within the second position measurement area 1220b.

In various embodiments, the message display area 1230 may display a message 1230b requesting the user to change a position of a device.

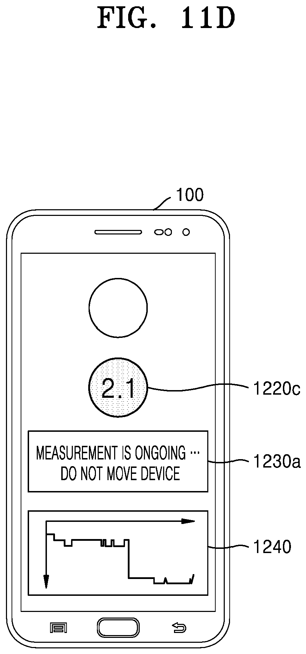

Referring to FIG. 11D, in response to a second user input being received, the second user input of confirming that the electronic device 100 is disposed at a second position, the electronic device 100 may display an ongoing-measurement user interface indicating that an RSSI of a wireless communication signal received from the external electronic device 200 is being measured at the second position.

In various embodiments, in response to a second user input being received via the second position measurement area 1220b activated to an input standby mode, the electronic device 100 may activate the second position measurement area 1220 to an ongoing-measurement mode. In an embodiment, a second position measurement area 1220c activated to the ongoing-measurement mode may be displayed to be visually different from the second position measurement area 1220b in an inactive state or another active mode, as in the first position measurement area 1210. For example, the second position measurement area 1220c activated to the ongoing-measurement mode may internally include information (e.g., text, image, icon, symbol, or the like) indicating ongoing measurement. In an embodiment, the second position measurement area 1220c activated to the ongoing-measurement mode may display a remaining measurement time in real time.

In various embodiments, the message display area 1230 may display the message 1230a requesting the user not to move a device while an RSSI of a received wireless communication signal is measured at the second position.

In various embodiments, the RSSI display area 1240 may display an RSSI measurement result at the second position. In an embodiment, the RSSI display area 1240 may display a measured RSSI in a real-time graph. In an embodiment, the RSSI display area 1240 may display the result of previous measurement at the first position along with the result of measurement at the second position.

In various embodiments, the electronic device 100 may determine whether the RSSI measurement result at the second position satisfies a preset condition. For example, the electronic device 100 may determine whether a deviation of the RSSI measured at the second position is smaller than a preset deviation threshold. When the preset condition is satisfied, the electronic device 100 may determine that the measurement at the second position is completed. Otherwise, the electronic device 100 may determine that the measurement has failed and may display the re-measurement user interface of FIG. 11E.

In various embodiments, in response to the RSSI measurement at the second position being completed, the electronic device 100 may determine whether the external electronic device 200 is proximate, based on a difference between the RSSI measured at the first position and the RSSI measured at the second position. According to a result of the determination, the electronic device 100 may display an authentication completion user interface or an authentication failure user interface of FIG. 11E.

In an embodiment, in response to the RSSI measurement at the second position being completed, the electronic device 100 may re-display the measurement standby user interface 1210a of FIG. 11A so as to perform re-measurement at the first position.

Referring to FIG. 11E, the electronic device 100 may display a user interface showing a result of determination of a proximity check procedure.

In various embodiments, when the RSSI measurement result at the first position or the second position does not satisfy the preset condition, the electronic device 100 may display a re-measurement user interface as shown in the left of FIG. 11E. In an embodiment, the re-measurement user interface may include the result display area 1250 for displaying a message requesting a user for re-measurement and the procedure end button 1260 for receiving a confirmation input from the user. In an embodiment, in response to the confirmation input being received via the procedure end button 1260, the electronic device 100 may display the measurement standby user interface (1210a in FIG. 11A or 1220b in FIG. 11C) at a position for re-measurement.

In various embodiments, when it is determined that the external electronic device 200 is proximate, the electronic device 100 may display an authentication completion user interface as shown in the center of FIG. 11E. In an embodiment, the authentication completion user interface may include the result display area 1250 for displaying a message notifying the user of verification of proximity of the external electronic device 200 and the procedure end button 1260 for receiving a confirmation input from the user. In an embodiment, in response to the confirmation input being received via the procedure end button 1260, the electronic device 100 may authenticate the external electronic device 200 as a trusted device and may establish wireless connection with the external electronic device 200.

In various embodiments, when it is determined that proximity of the external electronic device 200 cannot be verified, the electronic device 100 may display an authentication failure user interface as shown in the right of FIG. 11E. In an embodiment, the authentication failure user interface may include the result display area 1250 for displaying a message notifying the user of failure of proximity verification of the external electronic device 200 and the procedure end button 1260 for receiving a confirmation input from the user. In an embodiment, in response to the confirmation input being received via the procedure end button 1260, the electronic device 100 may reject authentication of the external electronic device 200 and may end a wireless authentication procedure.

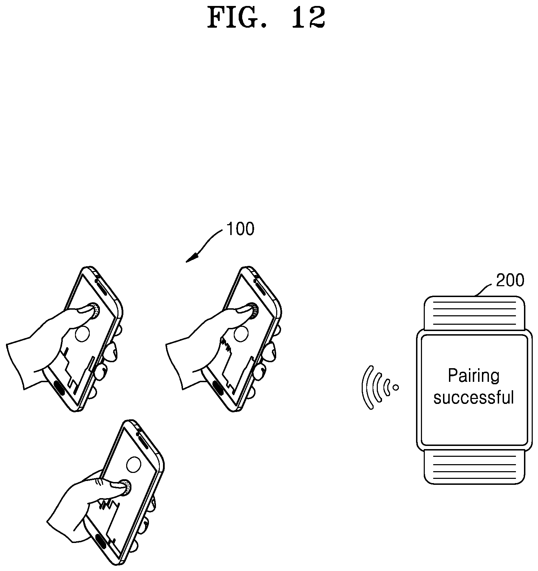

FIG. 12 is a diagram illustrating an embodiment in which a method of the present disclosure by which an electronic device determines proximity is used.

Referring to FIG. 12, an embodiment is illustrated, in which the electronic device 100 checks proximity of the external electronic device 200 so as to perform pairing with the external electronic device 200 via a wireless communication channel. The external electronic device 200 being a wearable device such as a watch, a headphone, a sensor, or the like and the electronic device 100 may be connected to each other by using a wireless communication scheme. For wireless communication connection to the external electronic device 200, the electronic device 100 may configure mutual connection information and may perform pairing.

In an embodiment, in order for the electronic device 100 to perform pairing on the external electronic device 200, the electronic device 100 may check whether the external electronic device 200 is a trusted device. In an embodiment, in order to establish trusted wireless communication connection with the external electronic device 200, the electronic device 100 may request the external electronic device 200 to be positioned in a proximate range. In an embodiment, when the electronic device 100 authenticates the external electronic device 200 at least for the first time, the electronic device 100 may verify proximity of the external electronic device 200 according to various embodiments of the present disclosure.

In an embodiment, when it is determined that the external electronic device 200 is proximate to the electronic device 100, the electronic device 100 may authenticate the external electronic device 200 as a trusted device, and may perform pairing on the external electronic device 200 via a wireless communication channel.

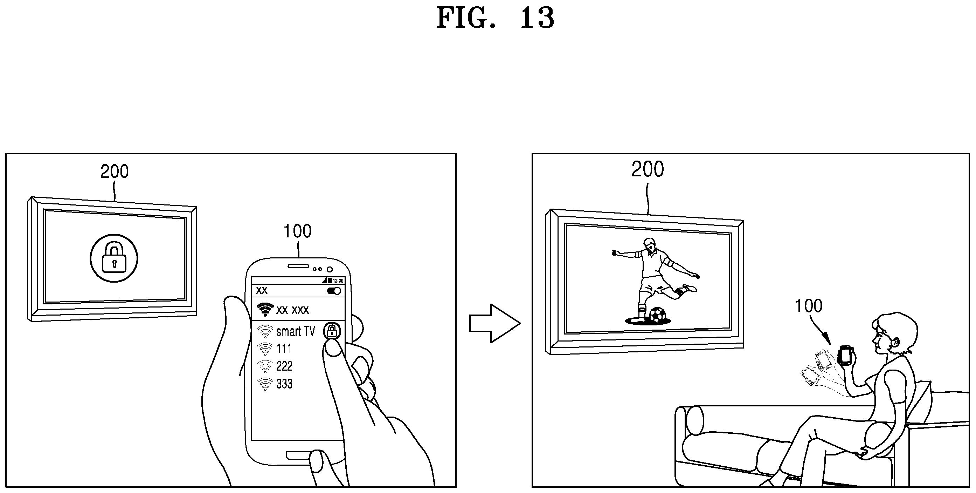

FIG. 13 is a diagram illustrating another embodiment in which a method of the present disclosure by which an electronic device determines proximity is used.

Referring to FIG. 13, an embodiment is illustrated, in which the electronic device 100 checks proximity of the external electronic device 200 so as to unlock locking of the external electronic device 200. In various embodiments, the external electronic device 200 may be home appliance to perform a preset function, and the electronic device 100 may be a device to control or configure a function of the external electronic device 200. The external electronic device 200 may have a locked state to provide a function only to an authenticated user.

In an embodiment, the electronic device 100 may detect the external electronic device 200 that is connectable by using a wireless communication scheme. In an embodiment, the electronic device 100 may detect the external electronic device 200 by receiving a wireless communication signal received from the external electronic device 200. In an embodiment, the electronic device 100 may check whether the detected external electronic device 200 has a locked state.

In an embodiment, the electronic device 100 may receive a user input for unlocking locking of the external electronic device 200. In an embodiment, a user may perform user authentication via the electronic device 100 so as to unlock locking of the external electronic device 200. For the user authentication, the electronic device 100 may perform a procedure for checking whether the external electronic device 200 is a trusted device. In an embodiment, the electronic device 100 may receive an input of a preset standard secret code from the user or may exchange an encryption key with the external electronic device 200.

In an embodiment, the electronic device 100 may request the external electronic device 200 to be positioned in a proximate range so as to check whether a received wireless communication signal is not a fake signal from an attacker device but is a signal from the external electronic device 200 of which locking is actually intended to be unlocked. Therefore, in order to unlock locking of the external electronic device 200, the electronic device 100 may verify proximity of the external electronic device 200 according to various embodiments of the present disclosure.

In an embodiment, when it is determined that the external electronic device 200 is proximate to the electronic device 100, the electronic device 100 may authenticate the external electronic device 200 as a trusted device, and may establish encrypted wireless communication connection with the external electronic device 200. In an embodiment, the electronic device 100 may transmit a unlock command to the external electronic device 200 of which proximity is authenticated. The external electronic device 200 may unlock its locking according to the command received from the electronic device 100.

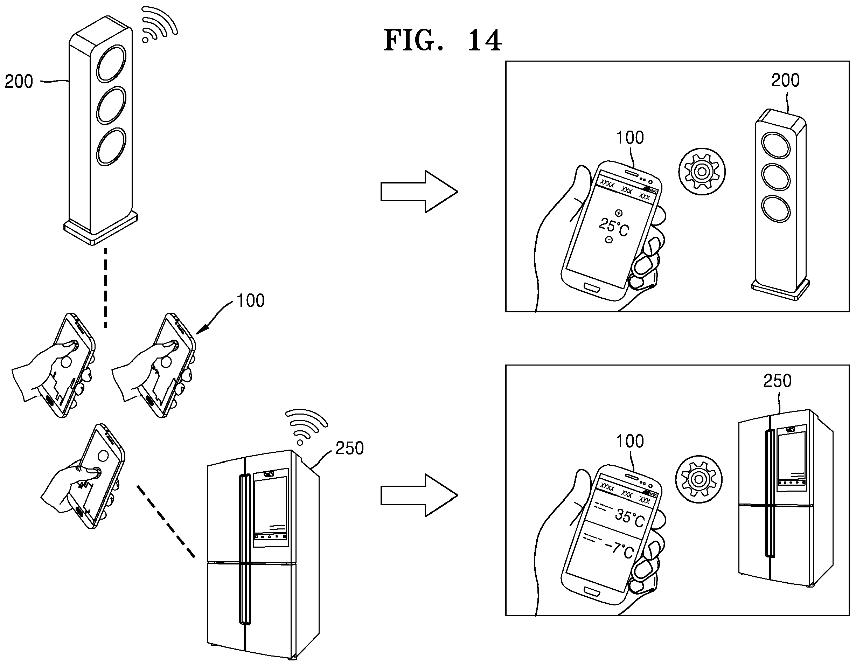

FIG. 14 is a diagram illustrating another embodiment in which a method of the present disclosure by which an electronic device determines proximity is used.

Referring to FIG. 14, an embodiment is illustrated, in which the electronic device 100 checks proximity of the external electronic device 200 so as to remotely control external electronic devices 200 and 250. The external electronic devices 200 and 250 may each be home appliance to perform a preset function, and the electronic device 100 may be a device to control or configure functions of the external electronic devices 200 and 250. In an embodiment, the electronic device 100 and the external electronic devices 200 and 250 may be connected to a common home network.

In an embodiment, the electronic device 100 may control or configure a function of the external electronic devices 200 and 250 by using a wireless communication scheme. In an embodiment, in order to establish wireless communication connection of the external electronic devices 200 and 250, the electronic device 100 may check whether the external electronic devices 200 and 250 are trusted devices. In an embodiment, in order to register the external electronic devices 200 and 250 in the home network 400, the electronic device 100 may check whether the external electronic devices 200 and 250 are trusted devices.

In an embodiment, in order to prevent that an attacker device disguising as an external electronic device penetrates into the electronic device 100, the electronic device 100 may be configured to establish trusted wireless communication connection with the external electronic devices 200 and 250 only when the external electronic devices 200 and 250 are in a proximate range. Therefore, when the electronic device 100 is connected to the external electronic devices 200 and 250 at least for the first time, the electronic device 100 may verify proximity of the external electronic devices 200 and 250 according to various embodiments of the present disclosure.

In an embodiment, when it is determined that the external electronic devices 200 and 250 are proximate to the electronic device 100, the electronic device 100 may authenticate the external electronic devices 200 and 250 as trusted devices, and may establish encrypted wireless communication connection with the external electronic devices 200 and 250. In an embodiment, the electronic device 100 may receive a user input for controlling or configuring operations of the external electronic devices 200 and 250 of which proximity is authenticated. In response to the user input, the electronic device 100 may transmit, to the external electronic devices 200 and 250, a command for controlling functions of the external electronic devices 200 and 250. The external electronic devices 200 and 250 may perform the functions according to the command received from the electronic device 100.

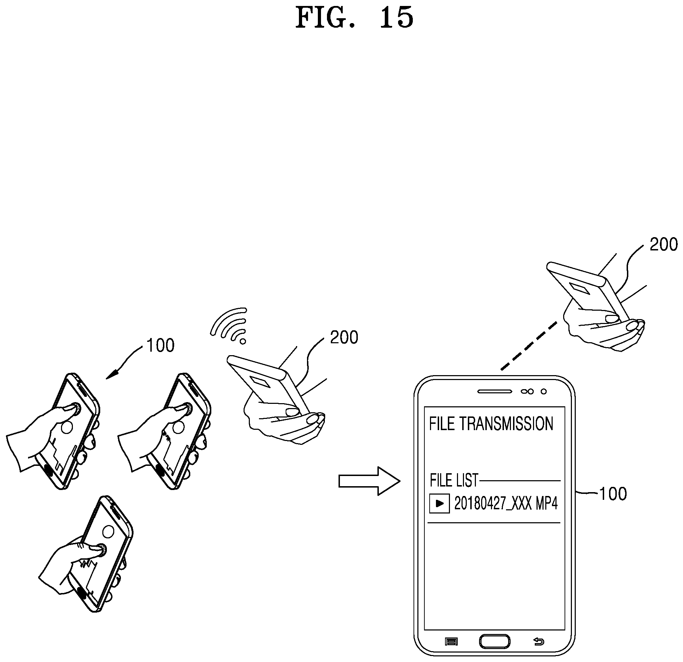

FIG. 15 is a diagram illustrating another embodiment in which a method of the present disclosure by which an electronic device determines proximity is used.

Referring to FIG. 15, an embodiment is illustrated, in which the electronic device 100 checks proximity of the external electronic device 200 so as to share content with the external electronic device 200 in a device-to-device (D2D) direction communication manner. The electronic device 100 and the external electronic device 200 may each have a function of directly transmitting and receiving data by using a wireless communication scheme without a network.

In an embodiment, the electronic device 100 may receive a user input for sharing content. In an embodiment, the electronic device 100 may detect the external electronic device 200 to share the content. In an embodiment, the electronic device 100 may detect the external electronic device 200 by receiving a wireless communication signal transmitted from the external electronic device 200. In an embodiment, the electronic device 100 may request the external electronic device 200 to be positioned in a proximate range so as to check whether the received wireless communication signal is from the external electronic device 200 to actually share the content. Therefore, before the electronic device 100 transmits the content to the external electronic device 200, the electronic device 100 may verify proximate of the external electronic device 200 according to various embodiments of the present disclosure.

In an embodiment, when it is determined that the external electronic device 200 is proximate to the electronic device 100, the electronic device 100 may authenticate the external electronic device 200 as a trusted device and may establish wireless communication connection so as to share the content with the external electronic device 200. In an embodiment, the electronic device 100 may transmit the content to the external electronic device 200 of which proximity is authenticated. In another embodiment, the electronic device 100 may receive content from the external electronic device 200 of which proximity is authenticated.

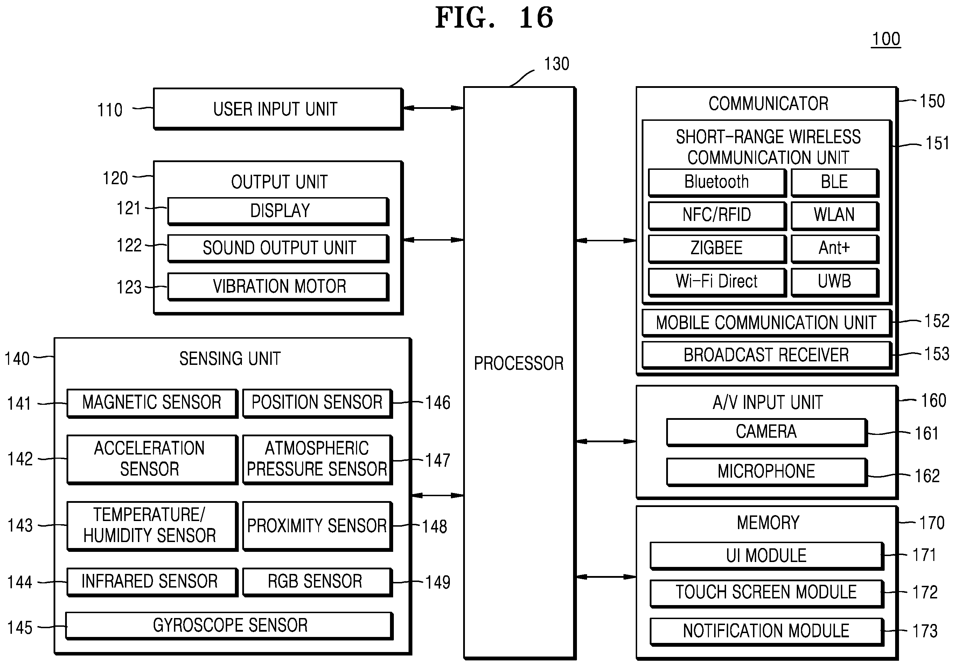

FIG. 16 is a block diagram illustrating a configuration of an electronic device for determining proximity of an external electronic device, according to various embodiments.

As illustrated in FIG. 16, the electronic device 100 according to some embodiments may include a user input unit 110, the output unit 120, the processor 130, a sensing unit 140, the communicator 150, an audio/video (A/V) input unit 160, and the memory 170. The user input unit 110 of FIG. 16 may correspond to the input unit 110 of FIG. 4. However, not all of the components illustrated in FIG. 16 are essential components of the electronic device 100. The electronic device 100 may be implemented with more components than the components illustrated in FIG. 16, or may be implemented with fewer components than the components illustrated in FIG. 16.

The user input unit 110 refers to a unit via which a user can input data for controlling the electronic device 100. For example, the user input unit 110 may be, but is not limited to, a key pad, a dome switch, a touch pad (e.g., a touch-type capacitive touch pad, a pressure-type resistive overlay touch pad, an infrared sensor-type touch pad, a surface acoustic wave conduction touch pad, an integration-type tension measurement touch pad, a piezoelectric effect-type touch pad, or the like), a jog wheel, or a jog switch.

In various embodiments, the user input unit 110 may receive a first user input of confirming that the electronic device 100 is disposed at a first position. In various embodiments, the user input unit 110 may receive a second user input of confirming that the electronic device 100 is disposed at a second position. In various embodiments, the user input unit 110 may receive a third user input of confirming that the electronic device 100 is re-disposed at the first position or the second position.

In various embodiments, the user input unit 110 may receive a user input for controlling or configuring an operation of the external electronic device 200. The user input unit 110 may receive a user input for receiving or transmitting content from or to the external electronic device 200.

The output unit 120 may output an audio signal, a video signal, or a vibration signal, and may include a display 121, a sound output unit 122, and a vibration motor 123.

The display 121 displays and outputs information processed by the electronic device 100.

In various embodiments, the display 121 may output information about a progress of a proximity check procedure with respect to the external electronic device 200. In an embodiment, the display 121 may output information indicating that RSSI measurement at a first position or a second position is being performed. In an embodiment, the display 121 may output information indicating that RSSI measurement at a first position or a second position is completed or information indicating a failure of RSSI measurement. In an embodiment, the display 121 may output information indicating a proximity determination result and authentication result with respect to the external electronic device 200.

In an embodiment, the display 121 may output a message requesting a user to dispose the electronic device 100 at a first position. In an embodiment, the display 121 may output a message requesting a user to change a position of the electronic device 100.

When the display 121 and a touch pad form a layer structure and thus constitute a touch screen, the display 121 may be used as both an input device and an output device.

The sound output unit 122 outputs audio data received from the communicator 150 or stored in the memory 170. Also, the audio output unit 122 outputs an audio signal related to a function (e.g., a call signal reception sound, a message reception sound, and a notification sound) performed by the electronic device 100. The audio output unit 122 may include a speaker, a buzzer, or the like.

The vibration motor 123 may output a vibration signal. For example, the vibration motor 123 may output a vibration signal corresponding to an output of audio data or video data (e.g., a call signal reception sound, a message reception sound, or the like). Also, the vibration motor may 123 may output a vibration signal when a touch is input to a touch screen.

The processor 130 may generally control the overall operation of the electronic device 100. For example, the processor 130 may execute programs stored in the memory 170 to generally control the user input unit 110, the output unit 120, the sensing unit 140, the communicator 150, the A/V input unit 160, or the like. The processor 130 may control operations of the electronic device 100 in the present disclosure by controlling the user input unit 110, the output unit 120, the sensing unit 140, the communicator 150, the A/V input unit 160, or the like.

In more detail, in various embodiments, in order to determine whether a wireless communication signal received via the communicator 150 is a signal from a trusted external electronic device, the processor 130 may check whether the external electronic device 200 is proximate to the electronic device 100.

In various embodiments, the processor 130 may measure an RSSI of a wireless communication signal received from the external electronic device 200 via the communicator 150 when the electronic device 100 is at a first position. The processor 130 may measure an RSSI of a wireless communication signal received from the external electronic device 200 via the communicator 150 when the electronic device 100 is at a second position different from the first position.

In an embodiment, the processor 130 may re-measure an RSSI of a wireless communication signal received from the external electronic device 200 via the communicator 150 at at least one of the first position or the second position. In an embodiment, when a measurement result of an RSSI at a particular position does not satisfy a preset reference, the processor 130 may determine to re-measure an RSSI at the corresponding position. In an embodiment, the processor 130 may determine a position at which an RSSI is to be re-measured, to be a random position among the first position and the second position.

In various embodiments, the processor 130 may determine whether the external electronic device 200 is proximate, based on a difference between the RSSI measured at the first position and the RSSI measured at the second position. In an embodiment, when the difference between the RSSI measured at the first position and the RSSI measured at the second position is equal to or smaller than a preset threshold, the processor 130 may determine that the external electronic device 200 is proximate to the electronic device 100.

In various embodiments, when a first user input confirming that the electronic device 100 is disposed at a first position is received from the user input unit 110, the processor 130 may measure an RSSI of a wireless communication signal received from the external electronic device 200 via the communicator 150 at the first position. When RSSI measurement at the first position is completed, the processor 130 may control the output unit 120 to request a user to change a position of the electronic device 100. When a second user input confirming that the electronic device 100 is disposed at a second position is received from the user input unit 110, the processor 130 may measure an RSSI of a wireless communication signal received from the external electronic device 200 via the communicator 150 at the second position.

In various embodiments, the processor 130 may control the communicator 150 to measure an RSSI of a wireless communication signal during a preset time period. In an embodiment, the processor 130 may randomly determine the preset time period for every RSSI measurement.

In various embodiments, when it is determined that the external electronic device 200 is proximate to the electronic device 100, the processor 130 may authenticate the external electronic device 200 as a trusted device. In an embodiment, the processor 130 may control the communicator 150 to establish encrypted wireless communication connection with the authenticated external electronic device 200.

The sensing unit 140 may detect a state of the electronic device 100 or a state of an environment around the electronic device 100, and may transmit the detected information to the processor 130.

The sensing unit 140 may include, but is not limited to, at least one of a magnetic sensor 141, an acceleration sensor 142, a temperature/humidity sensor 143, an infrared sensor 144, a gyroscope sensor 145, a position sensor (e.g., a GPS) 146, an atmospheric pressure sensor 147, a proximity sensor 148, and an RGB sensor 149. A function of each sensor may be intuitively deduced from the name by one of ordinary skill in the art, and thus detailed descriptions thereof are omitted.

The communicator 150 may include one or more communication modules for communication with the external electronic device 200 and the home network 400. For example, the communicator 150 may include a short-range wireless communication unit 151, a mobile communication unit 152, and a broadcast receiver 153.

The short-range wireless communication unit may include, but is not limited to, a Bluetooth communication unit, a BLE communication unit, a NFC unit, a WLAN (Wi-Fi) communication unit, a ZigBee communication unit, an IrDA communication unit, a WFD communication unit, an UWB communication unit, an Ant+ communication unit, and the like.

The mobile communication unit 152 transmits and receives a wireless signal to and from at least one of a base station, an external terminal, or a server, on a mobile communication network. Here, the wireless signal may include various types of data according to transmission and reception of voice call signals, video call signals, or text/multimedia messages.

The broadcast receiver 153 receives a broadcast signal and/or broadcast-related information from the outside via a broadcast channel. The broadcast channels may include satellite channels and terrestrial channels. According to an embodiment, the electronic device 100 may not include the broadcast receiver 153.

In various embodiments, the communicator 150 may receive a wireless communication signal received from the external electronic device 200 and may measure an RSSI of the wireless communication signal. In an embodiment, the communicator 150 may measure an RSSI of a wireless communication signal during a preset time period, under the control of the processor 130.

In various embodiments, the communicator 150 may establish encrypted wireless communication connection with the authenticated external electronic device 200. In an embodiment, the communicator 150 may receive information about a state of the authenticated external electronic device 200. In an embodiment, the communicator 150 may transmit, to the authenticated external electronic device 200, a command for controlling or configuring an operation of the external electronic device 200. In an embodiment, the communicator 150 may receive content from the authenticated external electronic device 200. In an embodiment, the communicator 150 may transmit content to the authenticated external electronic device 200.

The A/V input unit 160 is via which an audio signal or a video signal is input, and may include a camera 161, a microphone 162, and the like. The camera 161 may obtain an image frame such as a still image or a moving image by using an image sensor, in a video call mode or an image-capturing mode. An image captured by the image sensor may be processed by the processor 130 or a separate image processor (not shown).

An image frame processed by the camera 161 may be stored in the memory 170 or may be transmitted to the outside via the communicator 150. Two or more cameras 161 may be provided according to the configuration of a terminal.

The microphone 162 receives an external audio signal, and processes the received audio signal into electrical voice data. For example, the microphone 162 may receive an audio signal from an external electronic device or a speaker. The microphone 162 may perform various denoising algorithms for removing noise occurring when the external audio signal is being received.

The memory 170 may store a program for processing and controlling by the processor 130, and may store data input to the electronic device 100 or output from the electronic device 100.

The memory 170 may include at least one of a flash memory-type storage medium, a hard disk-type storage medium, a multimedia card micro-type storage medium, a card-type memory (e.g., SD or xD memory), RAM, SRAM, ROM, EEPROM, PROM, magnetic memory, a magnetic disk, and an optical disc.

The programs stored in the memory 170 may be classified into a plurality of modules according to functions thereof, for example, into a user interface (UI) module 171, a touch screen module 172, a notification module 173, and the like.

The UI module 171 may provide a specialized UI, a graphical user interface (GUI), or the like that interoperates with the electronic device 100, for each application. The touch screen module 172 may detect a touch gesture on a touch screen by a user, and may transmit information about the touch gesture to the processor 130. The touch screen module 172 according to some embodiments may recognize and analyze touch code. The touch screen module 172 may be configured as separate hardware including a controller.

In order to detect a touch or a proximity touch on the touch screen, various sensors may be provided inside or near the touch screen. Examples of the sensors for detecting a touch on the touch screen include a tactile sensor. The tactile sensor detects a contact of a particular object to a degree greater than or equal to the degree to which a human detects a touch. The tactile sensor may detect various pieces of information including the roughness of a contact surface, the rigidity of a contact object, or the temperature of a contact point.

Examples of the sensors for detecting a touch on the touch screen include a proximity sensor.

The proximity sensor refers to a sensor that detects the presence or absence of an object approaching a certain detection surface or an object existing near the sensor by using an electromagnetic force or infrared light, without mechanical contact. A user's touch gesture may include tap, touch and hold, double-tap, drag, panning, flick, drag and drop, swipe, and the like.

The notification module 173 may generate a signal for notifying of the occurrence of an event in the electronic device 100. The notification module 173 may output a notification signal via the display 121 in the form of a video signal, may output a notification signal via the sound output unit 122 in the form of an audio signal, and may output a notification signal via the vibration motor 123 in the form of a vibration signal.

According to various embodiments, the electronic device 100 determines proximity by using only a wireless communication signal to be used in connection to the external electronic device 200, and thus, requests only a single wireless communication channel without requesting an additional communication channel and hardware configuration. Also, most smart devices are already equipped with elements required for the present disclosure, and thus, a system for implementing a proximity check procedure of the present disclosure may be implemented by using existing electronic devices without an additional change in hardware.

According to various embodiments described above, a user may not need to greatly move the electronic device 100 in a proximity check procedure. Also, the proximity check is determined only based on relative greatness of an RSSI difference and is not dependent on setting of the electronic device 100, an antenna position, or accuracy of an operation by the user. Therefore, a method of determining proximity according to the present disclosure may be highly usable and obtain a stable and predictable result.

According to various embodiments described above, the electronic device 100 may randomly determine an initial position and a measurement time period, and thus, may decrease a probability that the attacker device 300 fakes variance of an RSSI measured by the electronic device 100 and may provide a sufficient security level against an attack from a fake device generating a fake wireless communication signal.

Some embodiments of the present disclosure may be embodied as a computer-readable recording medium, e.g., a program module to be executed in computers, which includes computer-readable instructions. The computer-readable recording medium may include any usable medium that may be accessed by computers, volatile and non-volatile medium, and detachable and non-detachable medium. Also, the computer-readable recording medium may include a computer storage medium and a communication medium. The computer storage medium includes all volatile and non-volatile media, and detachable and non-detachable media which are technically implemented to store information including computer-readable instructions, data structures, program modules or other data. The communication medium may generally include computer-readable instructions, data structures, or other data of a modulated data signal such as program modules.

Throughout the specification, the term "unit" may indicate a hardware component such as a processor or a circuit, and/or may indicate a software component that is executed by a hardware configuration such as a processor.

While the present disclosure has been particularly shown and described with reference to the accompanying drawings, in which embodiments of the present disclosure are shown, it is obvious to one of ordinary skill in the art that the present disclosure may be easily embodied in many different forms without changing the technical concept or essential features of the present disclosure. Thus, it should be understood that the embodiments described herein should be considered in a descriptive sense only and not for purposes of limitation. For example, configuring elements that are singular forms may be executed in a distributed fashion, and also, configuring elements that are distributed may be combined and then executed.

The scope of the present disclosure is defined by the appended claims, rather than defined by the aforementioned detailed descriptions, and all differences and modifications that can be derived from the meanings and scope of the claims therefrom will be construed as being included in the present disclosure.

**Claims**

1. A method, performed by an electronic device (100), of determining proximity of an external electronic device (200, 250), the method comprising:

   measuring a first received signal strength indicator, RSSI, of a first wireless communication signal received from the external electronic device (200, 250) when the electronic device (100) is at a first position;
   measuring a second RSSI of a second wireless communication signal received from the external electronic device (200, 250) when the electronic device (100) is at a second position different from the first position; and

   **characterized by** the method comprising:
   determining that the external electronic device (200, 250) is proximate to the electronic device (100), based on an RSSI difference (ΔRSSI) calculated from the first RSSI measured at the first position and the second RSSI measured at the second position is equal to or greater than a preset threshold.

2. The method of claim 1, wherein the first position is closer to the external electronic device (200, 250) than the second position.

3. The method of claim 1, wherein

the measuring of the first RSSI of the first wireless communication signal received from the external electronic device (200, 250) when the electronic device (100) is at the first position comprises:

receiving, from a user of the electronic device (100), a first user input of confirming that the electronic device (100) is disposed at the first position; and
measuring an RSSI of a wireless communication signal received from the external electronic device (200, 250), when the first user input is received, and
the measuring of the second RSSI of the second wireless communication signal received from the external electronic device (200, 250) when the electronic device (100) is at the second position comprises:

requesting the user to change a position of the electronic device (100);
receiving, from the user, a second user input of confirming that the electronic device (100) is disposed at the second position; and
measuring an RSSI of a wireless communication signal received from the external electronic device (200, 250), when the second user input is received.

4. The method of claim 1, further comprising measuring an RSSI of a wireless communication signal received from the external electronic device (200, 250), during a preset time period.

5. The method of claim 4, wherein the preset time period is randomly determined for every RSSI measurement.

6. The method of claim 4, wherein an RSSI of the wireless communication signal received from the external electronic device (200, 250) is determined to be an average of the RSSI measured during the preset time period.

7. The method of claim 4, wherein the measuring of the RSSI of the wireless communication signal received from the external electronic device (200, 250) comprises:

measuring, during the preset time period, the RSSI of the wireless communication signal received from the external electronic device (200, 250);
calculating a deviation of the RSSI measured during the preset time period; and
requesting a user of the electronic device (100) for re-measurement when the calculated deviation is equal to or greater than the threshold.

8. The method of claim 1, wherein the measuring of the second RSSI of the second wireless communication signal received from the external electronic device (200, 250) when the electronic device (100) is at the second position comprises, when the RSSI difference ($\Delta$RSSI) calculated from the first RSSI measured at the first position and the second RSSI measured at the second position is equal to or smaller than the threshold, requesting a user of the electronic device (100) for re-measurement.

9. The method of claim 1, further comprising:

after measuring the first and second RSSI of the first and second wireless communication signal, respectively at the first position and the second position, remeasuring an RSSI of a wireless communication signal received from the external electronic device (200, 250) at at least one of the first position or the second position; and
determining whether the external electronic device (200, 250) is proximate to the electronic device (100), based on the re-measured RSSI.

10. The method of claim 1, further comprising, when it is determined that the external electronic device (200, 250) is proximate to the electronic device (100), authenticating the external electronic device (200, 250).

11. The method of claim 1, further comprising, when it is determined that the external electronic device (200, 250) is proximate to the electronic device (100), establishing encrypted wireless communication connection between the external electronic device (200, 250) and the electronic device (100).

12. The method of claim 1, further comprising, when it is determined that the external electronic device (200, 250) is proximate to the electronic device (100), transmitting, from the electronic device (100) to the external electronic device (200, 250), a command for controlling the external electronic device (200, 250).

**13.** An electronic device (100) comprising:

a communicator (150) configured to receive a wireless communication signal from an external electronic device (200, 250) and measure a received signal strength indicator ,RSSI, of the received wireless communication signal;
a memory (170) storing one or more instructions; and
at least one processor (130),
wherein the at least one processor (130) is configured to execute the one or more instructions to:

measure a first RSSI of a first wireless communication signal received via the communicator (150) from the external electronic device (200, 250) when the electronic device (100) is at a first position,
measure a second RSSI of a second wireless communication signal received via the communicator (150) from the external electronic device (200, 250) when the electronic device (100) is at a second position different from the first position, and

**characterized in that** the at least one processor (130) is configured to further execute the one or more instructions to: determine that the external electronic device (200, 250) is proximate to the electronic device (100), based on an RSSI difference (ΔRSSI) from the first RSSI measured at the first position and the second RSSI measured at the second position is equal to or greater than a preset threshold.

**14.** A non-transitory computer-readable recording medium storing a program for performing the method of any one of the claims 1 to 3, and 5 to 12, on a computer.

**Patentansprüche**

**1.** Verfahren, das von einem elektronischen Gerät (100) durchgeführt wird, um die Nähe eines externen elektronischen Geräts (200, 250) zu bestimmen, wobei das Verfahren Folgendes umfasst:

Messen eines ersten empfangenen Signalstärkeindikators (RSSI) eines vom externen elektronischen Gerät (200, 250) empfangenen ersten drahtlosen Kommunikationssignals, wenn sich das elektronische Gerät (100) an einer ersten Position befindet;
Messen eines zweiten RSSI eines vom externen elektronischen Gerät (200, 250) empfangenen zweiten drahtlosen Kommunikationssignals, wenn sich das elektronische Gerät (100) an einer zweiten Position befindet, die sich von der ersten Position unterscheidet; und **gekennzeichnet durch** das Verfahren, das Folgendes umfasst:
Feststellen, dass sich das externe elektronische Gerät (200, 250) in der Nähe des elektronischen Geräts (100) befindet, basierend darauf, dass eine RSSI-Differenz (ARSSI), die aus dem an der ersten Position gemessenen ersten RSSI und dem an der zweiten Position gemessenen zweiten RSSI berechnet wird, gleich oder größer als ein voreingestellter Schwellenwert ist.

**2.** Verfahren nach Anspruch 1, wobei die erste Position näher an dem externen elektronischen Gerät (200, 250) liegt als die zweite Position.

**3.** Verfahren nach Anspruch 1, wobei
das Messen des ersten RSSI des vom externen elektronischen Gerät (200, 250) empfangenen ersten drahtlosen Kommunikationssignals, wenn sich das elektronische Gerät (100) an der ersten Position befindet, Folgendes umfasst:

Empfangen einer ersten Benutzereingabe von einem Benutzer des elektronischen Geräts (100), die bestätigt, dass sich das elektronische Gerät (100) an der ersten Position befindet; und
Messen eines RSSI eines vom externen elektronischen Gerät (200, 250) empfangenen drahtlosen Kommunikationssignals, wenn die erste Benutzereingabe empfangen wird, und
das Messen des zweiten RSSI des vom externen elektronischen Gerät (200, 250) empfangenen zweiten drahtlosen Kommunikationssignals, wenn sich das elektronische Gerät (100) an der zweiten Position befindet, Folgendes umfasst:

Auffordern des Benutzers, eine Position des elektronischen Geräts (100) zu ändern;

Empfangen einer zweiten Benutzereingabe vom Benutzer, die bestätigt, dass sich das elektronische Gerät (100) an der zweiten Position befindet; und

Messen eines RSSI eines vom externen elektronischen Gerät (200, 250) empfangenen drahtlosen Kommunikationssignals, wenn die zweite Benutzereingabe empfangen wird.

4. Verfahren nach Anspruch 1, umfassend ferner das Messen eines RSSI eines vom externen elektronischen Gerät (200, 250) empfangenen drahtlosen Kommunikationssignals während eines voreingestellten Zeitraums.

5. Verfahren nach Anspruch 4, wobei der voreingestellte Zeitraum für jede RS SI-Messung zufällig bestimmt wird.

6. Verfahren nach Anspruch 4, wobei ein RSSI des vom externen elektronischen Gerät (200, 250) empfangenen drahtlosen Kommunikationssignals als Durchschnitt des während des voreingestellten Zeitraums gemessenen RSSI bestimmt wird.

7. Verfahren nach Anspruch 4, wobei das Messen des RSSI des vom externen elektronischen Gerät (200, 250) empfangenen drahtlosen Kommunikationssignals Folgendes umfasst:

Messen des RSSI des vom externen elektronischen Gerät (200, 250) empfangenen drahtlosen Kommunikationssignals während des voreingestellten Zeitraums;

Berechnen einer Abweichung des während des voreingestellten Zeitraums gemessenen RSSI; und Auffordern eines Benutzers des elektronischen Geräts (100) zur erneuten Messung, wenn die berechnete Abweichung gleich oder größer als der Schwellenwert ist.

8. Verfahren nach Anspruch 1, wobei das Messen des zweiten RSSI des vom externen elektronischen Gerät (200, 250) empfangenen zweiten drahtlosen Kommunikationssignals, wenn sich das elektronische Gerät (100) an der zweiten Position befindet, Folgendes umfasst: Auffordern eines Benutzers des elektronischen Geräts (100) zur erneuten Messung, wenn die RSSI-Differenz (ARSSI), die aus dem an der ersten Position gemessenen ersten RSSI und dem an der zweiten Position gemessenen zweiten RSSI berechnet wird, gleich oder kleiner als der Schwellenwert ist.

9. Verfahren nach Anspruch 1, umfassend ferner:
erneutes Messen eines RSSI eines vom externen elektronischen Gerät (200, 250) empfangenen drahtlosen Kommunikationssignals an mindestens einer von der ersten Position und der zweiten Position nach dem Messen des ersten und zweiten RSSI des ersten bzw. des zweiten drahtlosen Kommunikationssignals jeweils an der ersten Position bzw. der zweiten Position; und Feststellen basierend auf dem erneut gemessenen RSSI, ob sich das externe elektronische Gerät (200, 250) in der Nähe des elektronischen Geräts (100) befindet.

10. Verfahren nach Anspruch 1, umfassend ferner das Authentifizieren des externen elektronischen Geräts (200, 250), wenn festgestellt wird, dass sich das externe elektronische Gerät (200, 250) in der Nähe des elektronischen Geräts (100) befindet.

11. Verfahren nach Anspruch 1, umfassend ferner das Herstellen einer verschlüsselten drahtlosen Kommunikationsverbindung zwischen dem externen elektronischen Gerät (200, 250) und dem elektronischen Gerät (100), wenn festgestellt wird, dass sich das externe elektronische Gerät (200, 250) in der Nähe des elektronischen Geräts (100) befindet.

12. Verfahren nach Anspruch 1, umfassend ferner das Senden eines Befehls zur Steuerung des externen elektronischen Geräts (200, 250) vom elektronischen Gerät (100) an das externe elektronische Gerät (200, 250), wenn festgestellt wird, dass sich das externe elektronische Gerät (200, 250) in der Nähe des elektronischen Geräts (100) befindet.

13. Elektronisches Gerät (100), umfassend:

einen Kommunikator (150), der dazu konfiguriert ist, ein drahtloses Kommunikationssignal von einem externen elektronischen Gerät (200, 250) zu empfangen und einen empfangenen Signalstärkeindikator (RSSI) des empfangenen drahtlosen Kommunikationssignals zu messen;

einen Speicher (170), in dem ein oder mehrere Befehle gespeichert sind; und

mindestens einen Prozessor (130),

wobei der mindestens eine Prozessor (130) so konfiguriert ist, dass er den einen oder die mehreren Befehle ausführt, um

einen ersten RSSI eines über den Kommunikator (150) vom externen elektronischen Gerät (200, 250) empfangenen ersten drahtlosen Kommunikationssignals zu messen, wenn sich das elektronische Gerät (100) an einer ersten Position befindet,

einen zweiten RSSI eines über den Kommunikator (150) vom externen elektronischen Gerät (200, 250) empfangenen zweiten drahtlosen Kommunikationssignals zu messen, wenn sich das elektronische Gerät (100) an einer zweiten Position befindet, die sich von der ersten Position unterscheidet, und

**dadurch gekennzeichnet, dass** der mindestens eine Prozessor (130) so konfiguriert ist, dass er den einen oder die mehreren Befehle weiter ausführt, um

festzustellen, dass sich das externe elektronische Gerät (200, 250) in der Nähe des elektronischen Geräts (100) befindet, basierend darauf, dass eine RSSI-Differenz (ARSSI) zwischen dem an der ersten Position gemessenen ersten RSSI und dem an der zweiten Position gemessenen zweiten RSSI gleich oder größer als ein voreingestellter Schwellenwert ist.

14. Nichtvorübergehendes, computerlesbares Aufzeichnungsmedium, auf dem ein Programm zum Ausführen des Verfahrens nach einem der Ansprüche 1 bis 3 und 5 bis 12 auf einem Computer gespeichert ist.

**Revendications**

1. Procédé, mis en œuvre par un dispositif électronique (100), de détermination de la proximité d'un dispositif électronique externe (200, 250), le procédé comprenant :

mesurer un premier indicateur d'intensité de signal reçu, (received signal strength indicator) RSSI, d'un premier signal de communication sans fil reçu depuis le dispositif électronique externe (200, 250) lorsque le dispositif électronique (100) est à une première position ;

mesurer un deuxième RSSI d'un deuxième signal de communication sans fil reçu depuis le dispositif électronique externe (200, 250) lorsque le dispositif électronique (100) est à une deuxième position différente de la première position; et **caractérisé en ce que** le procédé comprend :

déterminer que le dispositif électronique externe (200, 250) est proximal du dispositif électronique (100), en se basant sur une différence de RSSI (ARSSI) calculée à partir du premier RSSI mesuré à la première position et le deuxième RSSI mesuré à la deuxième position est égal ou supérieur à un seuil prédéfini.

2. Procédé selon la revendication 1, dans lequel la première position est plus proche du dispositif électronique externe (200, 250) que la deuxième position.

3. Procédé selon la revendication 1, dans lequel
mesurer le premier RSSI du premier signal de communication sans fil reçu depuis le dispositif électronique externe (200, 250) lorsque le dispositif électronique (100) est en une première position comprend :

recevoir, d'un utilisateur du dispositif électronique (100), une première entrée utilisateur confirmant que le dispositif électronique (100) est placé à la première position ; et

mesurer le premier RSSI du premier signal de communication sans fil reçu depuis le dispositif électronique externe (200, 250), lorsque la première entrée utilisateur est reçue, et

mesurer le deuxième RSSI du deuxième signal de communication sans fil reçu depuis le dispositif électronique externe (200, 250) lorsque le dispositif électronique (100) est à la deuxième position comprend :

demander à l'utilisateur de changer la position du dispositif électronique (100) ;

recevoir, de l'utilisateur, une deuxième entrée de confirmation que le dispositif électronique (100) est placé à la deuxième position ; et

mesurer le RSSI d'un signal de communication sans fil reçu depuis le dispositif électronique externe (200, 250), lorsque la deuxième entrée utilisateur est reçue.

4. Procédé selon la revendication 1, comprenant en outre mesurer le RSSI d'un signal de communication sans fil reçu depuis le dispositif électronique externe (200, 250), durant une période de temps prédéfinie.

5. Procédé selon la revendication 4, dans lequel la période de temps prédéfinie est déterminée de façon aléatoire pour chaque mesure RSSI.

**6.** Procédé selon la revendication 4, dans lequel le RSSI d'un signal de communication sans fil reçu depuis le dispositif électronique externe (200, 250) est déterminé être une moyenne des RSSI mesurés durant la période de temps prédéfinie.

**7.** Procédé selon la revendication 4, dans lequel mesurer le RSSI d'un signal de communication sans fil reçu depuis le dispositif électronique externe (200, 250) comprend :

mesurer, durant la période de temps prédéfinie, le RSSI du signal de communication sans fil reçu depuis le dispositif électronique externe (200, 250) ;
calculer une déviation du RSSI mesuré durant la période de temps prédéfinie ; et
demander à un utilisateur du dispositif électronique (100) une nouvelle mesure lorsque la déviation calculée est égale ou supérieure au seuil.

**8.** Procédé selon la revendication 1, dans lequel mesurer le deuxième RSSI du deuxième signal de communication sans fil reçu depuis le dispositif électronique externe (200, 250) lorsque le dispositif électronique (100) est à la deuxième position comprend, lorsque la différence de RSSI (ARSSI) calculée à partir du premier RSSI mesuré à la première position et le deuxième RSSI mesuré à la deuxième position est égal ou inférieure au seuil,
demander à un utilisateur du dispositif électronique (100) une nouvelle mesure.

**9.** Procédé selon la revendication 1, comprenant en outre :

après mesure du premier et du deuxième RSSI du premier et du deuxième signal de communication sans fil, respectivement à la première position et à la deuxième position, mesurer à nouveau le RSSI d'un signal de communication sans fil reçu depuis le dispositif électronique externe (200, 250) à au moins une entre la première position et la deuxième position ; et
déterminer si le dispositif électronique externe (200, 250) est proximal du dispositif électronique (100), en se basant sur la nouvelle mesure du RSSI.

**10.** Procédé selon la revendication 1, comprenant en outre, lorsqu'il est déterminé que le dispositif électronique externe (200, 250) est proximal du dispositif électronique (100), authentifier le dispositif électronique externe (200, 250).

**11.** Procédé selon la revendication 1, comprenant en outre, lorsqu'il est déterminé que le dispositif électronique externe (200, 250) est proximal du dispositif électronique (100), établir une connexion de communication sans fil cryptée entre le dispositif électronique externe (200, 250) et le dispositif électronique (100).

**12.** Procédé selon la revendication 1, comprenant en outre, lorsqu'il est déterminé que le dispositif électronique externe (200, 250) est proximal du dispositif électronique (100), émettre, depuis le dispositif électronique (100) au dispositif électronique externe (200, 250), une commande de contrôle du dispositif électronique externe (200, 250).

**13.** Dispositif électronique (100) comprenant :

un communicateur (150) configuré pour recevoir un signal de communication sans fil depuis un dispositif électronique externe (200, 250) et mesurer un indicateur d'intensité de signal reçu, (received signal strength indicator) RSSI, du signal de communication sans fil reçu ;
une mémoire (170) stockant une ou plusieurs instructions ; et
au moins un processeur (130),
dans lequel le au moins un processeur (130) est configuré pour exécuter la une ou plusieurs instructions pour :

mesurer un premier RSSI d'un premier signal de communication sans fil reçu via le communicateur (150) depuis le dispositif électronique externe (200, 250) lorsque le dispositif électronique (100) est à une première position,
mesurer un deuxième RSSI d'un deuxième signal de communication sans fil reçu via le communicateur (150) depuis le dispositif électronique externe (200, 250) lorsque le dispositif électronique (100) est à une deuxième position différente de la première position, et **caractérisé en ce que** le au moins un processeur (130) est configuré pour exécuter en outre la une ou plusieurs instructions pour :
déterminer que le dispositif électronique externe (200, 250) est proximal du dispositif électronique (100), en se basant sur une différence de RSSI (ARSSI) à partir du premier RSSI mesuré à la première position et le deuxième RSSI mesuré à la deuxième position est égal ou supérieur à un seuil prédéfini.

**14.** Support d'enregistrement non-transitoire lisible par ordinateur stockant un programme pour mettre en œuvre le procédé selon l'une quelconque des revendications 1 à 3, et 5 à 12, sur un ordinateur.

# FIG. 1

ELECTRONIC DEVICE (100)

EXTERNAL ELECTRONIC DEVICE (200)

HOME NETWORK (400)

ATTACKER DEVICE (300)

# FIG. 2

EXTERNAL ELECTRONIC DEVICE (200)

ELECTRONIC DEVICE (100)

DISTANCE

(A)

(B)

(C)

(D)

(E)

(F)

TIME

20

TIME

RSSI

TIME

RSSI

TIME

RSSI

ΔRSS

# FIG. 3A

EXTERNAL ELECTRONIC DEVICE (200)

CLOSE (~1m)

ELECTRONIC DEVICE (100)

12:12

12:12

30

DISTANCE

RSSI

ΔRSS

EP 4 132 018 B1

# FIG. 3B

ATTACKER DEVICE (300)

AWAY (~10m)

ELECTRONIC DEVICE (100)

12:12

12:12

DISTANCE

RSSI

ΔRSS

31

EP 4 132 018 B1

# FIG. 4

# FIG. 5

```
( START OF WIRELESS AUTHENTICATION )
              |
              v
  INPUT STANDARD SECRET CODE (PSK)  ─ S510
              |
              v
        EXCHANGE KEY               ─ S520
              |
              v
       VERIFY PROXIMITY            ─ S530
              |
              v
( END OF WIRELESS AUTHENTICATION )
```

# FIG. 6

START

MEASURE RSSI OF WIRELESS COMMUNICATION SIGNAL
RECEIVED FROM EXTERNAL ELECTRONIC DEVICE
WHEN ELECTRONIC DEVICE IS AT FIRST POSITION — S610

MEASURE RSSI OF WIRELESS COMMUNICATION SIGNAL
RECEIVED FROM EXTERNAL ELECTRONIC DEVICE
WHEN ELECTRONIC DEVICE IS AT SECOND POSITION
DIFFERENT FROM FIRST POSITION — S620

DETERMINE WHETHER EXTERNAL ELECTRONIC DEVICE
IS PROXIMATE, BASED ON DIFFERENCE BETWEEN RSSI
MEASURED AT FIRST POSITION AND RSSI
MEASURED AT SECOND POSITION — S630

END

# FIG. 7

START

RECEIVE, FROM USER, FIRST USER INPUT OF CONFIRMING THAT ELECTRONIC DEVICE IS DISPOSED AT FIRST POSITION — S710

MEASURE, AT FIRST POSITION, RSSI OF WIRELESS COMMUNICATION SIGNAL RECEIVED FROM EXTERNAL ELECTRONIC DEVICE — S720

OUTPUT, TO USER, REQUEST TO CHANGE POSITION OF ELECTRONIC DEVICE TO SECOND POSITION — S730

RECEIVE, FROM USER, SECOND USER INPUT OF CONFIRMING THAT ELECTRONIC DEVICE IS DISPOSED AT SECOND POSITION — S740

MEASURE, AT SECOND POSITION, RSSI OF WIRELESS COMMUNICATION SIGNAL RECEIVED FROM EXTERNAL ELECTRONIC DEVICE — S750

DETERMINE WHETHER EXTERNAL ELECTRONIC DEVICE IS PROXIMATE, BASED ON DIFFERENCE BETWEEN RSSI MEASURED AT FIRST POSITION AND RSSI MEASURED AT SECOND POSITION — S760

END

FIG. 8

# FIG. 9

# FIG. 10A

# FIG. 10B

# FIG. 10C

# FIG. 11A

100

START OF MEASUREMENT — 1210a

1220a

# FIG. 11B

# FIG. 11C

100

1210c

START OF MEASUREMENT

1220b

CHANGE POSITION OF DEVICE

1230b

# FIG. 11D

# FIG. 11E

1250 — MEASUREMENT HAS FAILED. PLEASE TRY AGAIN.

1260 — RE-TRY

PROXIMITY OF DEVICE IS CONFIRMED

COMPLETION OF AUTHENTICATION

PROXIMITY OF DEVICE IS NOT CONFIRMED

FAILURE OF AUTHENTICATION

# FIG. 12

100

200

Pairing
successful

# FIG. 13

EP 4 132 018 B1

**FIG. 14**

# FIG. 15

FILE TRANSMISSION

FILE LIST

▶ 20180427_XXX MP4

# FIG. 16

**100**

- **110** — USER INPUT UNIT

- **120** — OUTPUT UNIT
  - **121** — DISPLAY
  - **122** — SOUND OUTPUT UNIT
  - **123** — VIBRATION MOTOR

- **140** — SENSING UNIT
  - **141** — MAGNETIC SENSOR
  - **142** — ACCELERATION SENSOR
  - **143** — TEMPERATURE/HUMIDITY SENSOR
  - **144** — INFRARED SENSOR
  - **145** — GYROSCOPE SENSOR
  - **146** — POSITION SENSOR
  - **147** — ATMOSPHERIC PRESSURE SENSOR
  - **148** — PROXIMITY SENSOR
  - **149** — RGB SENSOR

**130** — PROCESSOR

- **150** — COMMUNICATOR
  - **151** — SHORT-RANGE WIRELESS COMMUNICATION UNIT
    - Bluetooth
    - BLE
    - NFC/RFID
    - WLAN
    - ZIGBEE
    - Ant+
    - Wi-Fi Direct
    - UWB
  - **152** — MOBILE COMMUNICATION UNIT
  - **153** — BROADCAST RECEIVER

- **160** — A/V INPUT UNIT
  - **161** — CAMERA
  - **162** — MICROPHONE

- **170** — MEMORY
  - **171** — UI MODULE
  - **172** — TOUCH SCREEN MODULE
  - **173** — NOTIFICATION MODULE

**EP 4 132 018 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016161020 A1

- US 2019191286 A1

**Non-patent literature cited in the description**

- Indoor Security Localization Algorithm Based on Location Discrimination Ability of AP. **LUO JUAN et al.** 16TH EUROPEAN CONFERENCE - COMPUTER VISION - ECCV 2020. CORNELL UNIVERSITY LIBRARY, 10 December 2019, 472-487